Europäisches Patentamt

European Patent Office

Office européen des brevets

(11) Veröffentlichungsnummer : **0 066 889**
**B1**

(12) **EUROPÄISCHE PATENTSCHRIFT**

(45) Veröffentlichungstag der Patentschrift :
20.09.89

(51) Int. Cl.⁴ : **G 01 S   7/48**

(21) Anmeldenummer : 82105042.4

(22) Anmeldetag : 08.06.82

(54) Dynamik-Steuerungsanordnung für ein Entfernungsmessgerät.

(30) Priorität : 09.06.81 DE 3122806
24.05.82 DE 3219452

(43) Veröffentlichungstag der Anmeldung :
15.12.82 Patentblatt 82/50

(45) Bekanntmachung des Hinweises auf die Patenterteilung : 20.09.89 Patentblatt 89/38

(84) Benannte Vertragsstaaten :
CH FR GB IT LI NL SE

(56) Entgegenhaltungen :
EP--A-- 0 057 447
FR--A-- 2 181 533
US--A-- 3 900 261

(73) Patentinhaber : **MITEC Mikroelektronik Mikrotechnik
Informatik GmbH
Prof.-Messerschmitt-Strasse 3
D-8014 Neubiberg (DE)**

(72) Erfinder : **Bölkow, Ludwig, Dr.
Oberfeldallee 9
D-8022 Grünwald (DE)**
Erfinder : **Mehnert, Walter, Dr.
Grillparzerstrasse 6
D-8012 Ottobrunn (DE)**
Erfinder : **Chaborski, Hoiko
Englschalkinger Strasse 239E
D-8000 München 81 (DE)**

(74) Vertreter : **Strasser, Wolfgang, Dipl.-Phys et al
Patentanwälte Strohschänk, Uri & Strasser Innere
Wiener Strasse 8
D-8000 München 80 (DE)**

**Beschreibung**

Die Erfindung betrifft ein Entfernungsmeßgerät nach dem Prinzip der Laufzeitmessung eines Meßlichtimpulses gemäß den Oberbegriffen der Ansprüche 1, 3 und 5. Ein solches Gerät ist aus US-A-3 900 261 bekannt.

Ein solches Entfernungsmeßgerät ist weiterhin auch in der EP-A-0 057 447 beschrieben. Bei dieser Druckschrift handelt es sich um Stand der Technik im Sinne von Art. 54 (3) EPÜ. Dort wird jeder vom Sender emittierte Lichtimpuls in zwei Teile aufgespalten, von denen der eine als Meßlichtimpuls zum Zielgegenstand emittiert und von dort zum Empfänger reflektiert und der andere als Referenzlichtimpuls direkt dem Empfänger zugeführt wird, wobei bei großen Meßentfernungen das vom Empfänger beim Empfang des Referenzlichtimpulses erzeugte Ausgangssignal zum Starten und das vom Empfänger beim Empfang des vom Zielgegenstand reflektierten Meßlichtimpulses erzeugte Ausgangssignal zum Anhalten der Laufzeitmessung dient.

Bei einem nach dem Prinzip der Lichtimpuls-Laufzeitmessung, arbeitenden Entfernungsmeßgerät ist es jedoch auch möglich, die Laufzeitmessung für einen Meßlichtimpuls nicht mit einem vom Meßlichtimpuls abgezweigten Referenzlichtimpuls sondern durch den vom Triggergenerator abgegebenen elektrischen Triggerimpuls zu starten, der den Sender zur Abgabe des Lichtimpulses veranlaßt, so daß hier also streng genommen keine Meßlichtimpuls- sondern eine Meßsignal-Laufzeitmessung vorgenommen wird, wobei das Meßsignal zunächst in elektrischer Form, dann als Lichtimpuls und dann wieder als elektrisches Signal auftritt. Der Einfluß der dabei während der beiden « elektrischen » Phasen auftretenden Signalverzögerungen und deren Schwankungs- und Drifterscheinungen auf das Meßergebnis wird dadurch beseitigt, daß unmittelbar vor und/oder nach dem Meßlichtimpuls ein Referenzlichtimpuls in den geräteinternen Referenzlichtweg eingespeist und für diesen Referenzlichtimpuls in der eben geschilderten Weise eine selbständige Referenzsignal-Laufzeitmessung durchgeführt wird. In diesem Fall ist die zeitliche Länge der « optischen » Phase genau bekannt, so daß die Signalverzögerungen in den beiden « elektrischen » Phasen ermittelt und wegen der Kürze der Zeit, in der Meßlichtimpuls und Referenzlichtimpuls aufeinanderfolgen, mit den bei der Meßsignal-Laufzeitmessung auftretenden Signalverzögerungen der dortigen « elektrischen » Phasen gleichgesetzt bzw. durch Subtraktion der so gewonnenen Laufzeit-Meßwerte eliminiert werden können. Für das dabei erforderliche Einspeisen des vom Sender emittierten Lichtimpulses einmal in den Meßlichtweg und einmal in den Referenzlichtweg ist ein Lichtweg-Umschalter vorgesehen, der von einem mechanisch beweglichen Teil, beispielsweise einem Spiegel gebildet werden kann und dabei entsprechende Meßlichtstellungen (Einspeisen des Lichtimpulses in den Meßlichtweg) und Referenzlichtstellungen (Einspeisen des Lichtimpulses in den Referenzlichtweg) durchläuft.

Unabhängig von der speziellen Erzeugungs- und Verwendungsart der Lichtimpulse ist es in jedem derartigen Entfernungsmeßgerät erforderlich, die Intensität bzw. Amplitude bzw. die in einem Lichtimpuls enthaltene Strahlungsenergie sowohl für die emittierten und/oder reflektierten Meßlichtimpulse als auch für die Referenzlichtimpulse unabhängig von der Senderleistung zu verändern, insbesondere zu dämpfen. Die Amplituden der empfangenen Meßlichtimpulse können nämlich wegen der unterschiedlichen Entfernungen und unterschiedlichen Reflexionseigenschaften der angepeilten Zielgegenstände und wegen der unterschiedlichen Transparenz des jeweils zwischen Meßgerät und Zielgegenstand liegenden Mediums bei gleichbleibender Senderleistung innerhalb eines Bereiches schwanken, der wesentlich größer als der Dynamikbereich eines hinreichend empfindlichen sowie schnell und genau arbeitenden optoelektrischen Empfängers ist.

Daher ist es zur Erzielung einer hohen Meßgenauigkeit nötig, die für eine große Meßreichweite hoch gewählte Intensität der vom Sender emittierten Lichtimpulse abzuschwächen, wenn sehr kleine Entfernungen und/oder die Entfernungen sehr gut reflektierender Zielgegenstände gemessen werden sollen. Da sich überdies das Ansprechverhalten des Empfängers in Abhängigkeit von der Intensität des auf den Photodetektor auffallenden Lichtimpulses ändern kann, ist es zur Erzielung einer möglichst gleichartigen Verarbeitung von Meßlichtimpulsen und Referenzlichtimpulsen erforderlich, daß letztere beim Empfang jeweils in etwa dieselbe Amplitude besitzen, wie der oder die zugehörigen Meßlichtimpulse. Bei sehr weit entfernten und/oder schlecht reflektierenden Zielgegenständen ist es daher erforderlich, die Amplitude der Referenzlichtimpulse entsprechend zu verringern. Zu diesem Zweck sind bei dem Entfernungsmeßgerät gemäß der EP-A-0 057 447 im Lichtweg zwischen der Empfangsoptik und dem Empfänger bzw. im Referenzlichtweg Dämpfungseinrichtungen, wie z. B. Irisblenden oder einfahrbare Filter vorgesehen, die jedoch entweder vergleichsweise groß und reaktionsträge und daher für hohe Meßfrequenzen ungeeignet oder kostspielig und somit nicht ohne weiteres einsetzbar sind.

Demgegenüber liegt der Erfindung die Aufgabe zugrunde, ein Entfernungsmeßgerät der eingangs genannten Art so weiterzubilden, daß die erforderliche Dämpfung der Lichtimpulsintensitäten auf einfache, kostengünstige und zuverlässige Art mit hoher Geschwindigkeit durchgeführt werden kann.

Zur Lösung dieser Aufgabe sieht die Erfindung die in den Ansprüchen 1 bzw. 2 bzw. 5 niedergelegten Merkmale vor. Diesen drei Varianten liegt ein gemeinsames erfindungsgemäßes Konzept zugrunde, das sich vom Stand der Technik in folgender Weise unterscheidet : Beim Stand der Technik wird der gewünschte Dämpfungsfaktor auf « statische » Weise, d. h. dadurch eingestellt, daß vor der Triggerung eines Lichtimpulses die verwendete Dämpfungsvorrichtung, z. B. eine Irisblende oder ein Graukeil oder dergleichen solange verstellt wird, bis sie den gewünschten Dämpfungsfaktor ergibt. Erst wenn dieser Zustand erreicht ist, wird der zu dämpfende Lichtimpuls getriggert und dann beim Durchlaufen der Dämpfungsvorrichtung in dem erforderlichen Ausmaß abgeschwächt. Sollen mehrere nacheinander erzeugte Lichtimpulse mit demselben Dämpfungsfaktor abgeschwächt werden, so bleibt während der Erzeugung und Ausbreitung aller dieser Lichtimpulse die Einstellung der Dämpfungsvorrichtung unverändert.

Demgegenüber arbeitet die Dämpfungsvorrichtung eines erfindungsgemäßen Entfernungsmeßgerätes « dynamisch », d. h. sie wird so betrieben, daß sich ihr Dämpfungsfaktor zumindest in dem Zeitraum, innerhalb dessen der zu dämpfende Lichtimpuls erzeugt werden soll, vorzugsweise aber ständig und periodisch innerhalb eines vorgebbaren Wertebereiches ändert. Weiterhin wird bei der Erfindung ein Signal erzeugt, das die zeitliche Änderung des Dämpfungsfaktors kennzeichnet oder beschreibt und das es einer Steuervorrichtung ermöglicht, den Triggergenerator zu veranlassen, mit dem zeitlichen Vorhalt ein Triggersignal abzugeben, der erforderlich ist, damit der so erzeugte Lichtimpuls genau in dem Zeitpunkt die Dämpfungsvorrichtung erreicht und durchläuft, in welchem diese den gewünschten Dämpfungsfaktor besitzt.

Dieses erfindungsgemäße Konzept ermöglicht es in völlig überraschender Weise, die Änderung des Dämpfungsfaktors der Dämpfungsvorrichtung mit Hilfe eines mechanisch beweglichen Teils zu bewirken, was äußerst kostengünstig ist, und gleichzeitig auch dann eine hohe Lichtimpuls-Folgefrequenz erlaubt, wenn für jeden der aufeinanderfolgenden Lichtimpulse ein anderer Dämpfungsfaktor gewünscht wird. Dies ist mit dem aus dem Stand der Technik bekannten statischen Konzept nicht möglich, bei dem das mechanisch bewegliche Teil der Dämpfungseinrichtung, z. B. die Irisblendenlamellen oder die den Graukeil tragende Glasplatte immer erst aus ihrer alten Stellung heraus beschleunigt, dann in Richtung der neuen Stellung bewegt und kurz vor dem Erreichen der neuen Stellung abgebremst werden muß, um dann womöglich noch eine oder mehrere Korrekturbewegungen auszuführen.

Im Rahmen des eben geschilderten erfindungsgemäßen Konzeptes, die Zeitpunkte des Auftreffens der Lichtimpulse auf das bewegliche Teil der Dämpfungsvorrichtung so zu steuern, daß bedingt durch die momentane Stellung des beweglichen Teils die gewünschte Dämpfung erzielt wird, liegen die in den Ansprüchen 1, 2 und 5 niedergelegten Varianten :

a) Gemäß Anspruch 1 liegt im Ausgangsbereich des mechanisch beweglichen Teils, das von einem periodisch schwingenden Spiegel oder einem mit etwa konstanter Winkelgeschwindigkeit rotierenden Spiegelprisma gebildet sein kann, nur ein einziger, weiterführender Einspeisungsabschnitt des Meßlichtweges und/oder des Referenzlichtweges. Zur Erzielung einer beispielsweise 50 %igen Dämpfung wird dabei dafür gesorgt, daß ein Lichtimpuls zu einem solchen Zeitpunkt auf den Spiegel oder das Spiegelprisma a trifft, daß durch die momentane Stellung dieses mechanisch beweglichen Teils bedingt nur die Hälfte der in dem Lichtimpuls enthaltenen Lichtmenge in das Eintrittsfenster des weiterführenden Lichtweges fällt, während die andere Hälfte daran vorbeiläuft und/oder absorbiert wird. Zur Erzielung einer geringeren oder größeren Dämpfung werden entsprechend andere Auftreffzeitpunkte für den Lichtimpuls auf das mechanisch bewegliche Teil gewählt, um den in den weiterführenden Lichtweg fallenden Lichtanteil zu vergrößern oder zu verkleinern. Der Vorteil einer solchen mit einer variablen Teilüberdeckung der Lichtwege im Augenblick des Durchgangs eines Lichtimpulses durch die Dämpfungsvorrichtung arbeitenden Anordnung besteht darin, daß sich mit ihr innerhalb weiter Grenzen eine kontinuierliche Dämpfung durchführen läßt. Schwierigkeiten gibt es hier allerdings dann, wenn der Lichtimpuls eine räumlich-zeitliche Dispersion besitzt, weil dann der zeitliche Schwerpunkt des weitergeleiteten Teils eines Lichtimpulses gegen den zeitlichen Schwerpunkt des ungeteilten Lichtimpulses in Abhängigkeit vom gewählten Dämpfungsgrad in unterschiedlicher Weise verschoben sein kann, was sich unmittelbar auf die zur Entfernungsbestimmung durchzuführende Laufzeitmessung auswirkt.

b) Bei der Variante gemäß Anspruch 2 wird dieses Problem dadurch gelöst, daß die Dämpfungsanordnung für den Lichtweg, in den sie eingebaut ist, mehrere optisch zueinander parallele Abschnitte aufweist, die dann im weiteren Verlauf wieder zu einem einzigen Lichtweg zusammengeführt werden, und von denen jeder ein Dämpfungselement mit einem festen Dämpfungsfaktor umfaßt, der sich jeweils von den Dämpfungsfaktoren in den anderen Abschnitten unterscheidet. Somit läßt sich eine gewünschte Dämpfung dadurch erzielen, daß der gesamte Lichtimpuls mit Hilfe des mechanisch beweglichen Teils jeweils in denjenigen Einspeisungsabschnitt gelenkt wird, in dem als Dämpfungselement ein diese Dämpfung bewirkendes Filter oder dergleichen angeordnet ist. Auf diese Weise läßt sich zwar die Dämpfung nur stufenweise verändern, doch führt das zu keinen besonderen Problemen, da zumindest der optoelektrische Empfänger immer einen gewissen Amplitudenbereich verarbeiten kann und die Dämpfungsfaktoren der verschiedenen Dämpfungselemente so aufeinander abgestimmt werden können, daß das Produkt aus dem jeweils kleineren Dämpfungsfaktor und aus der Dynamik des Empfängers etwas größer als der nächstgrößere Dämpfungsfaktor ist, so daß sich ein geringfügig überlappender Anschluß der einzelnen Dämpfungsbereiche zu einem lückenlosen Gesamt-Dämpfungsbereich ergibt. Ist darüber hinaus auch noch die Senderleistung veränderbar, so kann der dadurch zur Verfügung stehende Dynamikfaktor ebenfalls in dieses Produkt mit hereingenommen werden, so daß sich entsprechend größere Unterschiede zwischen den Dämpfungsfaktoren der einzelnen Filter und, bei gleichbleibendem Gesamt-Dämpfungsbereich, eine geringere Anzahl von Filtern ergibt.

In den Fällen, in denen dies die Struktur der Lichtimpulse erlaubt, kann erfindungsgemäß auch hier noch zusätzlich mit Teilüberdeckung der Lichtwege gearbeitet werden, wodurch sich die Zahl der optisch zueinander parallelen Lichtwegabschnitte verringern läßt.

c) Die besonders bevorzugte und vorteilhafte Variante gemäß Anspruch 5 kombiniert Teile der Varianten a) und b) in der Weise, daß nicht mehrere zueinander parallele Einspeisungsabschnitte für den jeweiligen Lichtweg erforderlich sind und dennoch nicht mit einer Teilüberdeckung der Lichtwege gearbeitet werden muß. Dies geschieht dadurch, daß durch die permanente Bewegung einer als mechanisch beweglicher Teil dienenden rotierenden Scheibe in den Lichtweg, in dem die Lichtimpulse gedämpft werden sollen, laufend Dämpfungselemente, beispielsweise Filter mit unterschiedlichen Dämpfungsfaktoren gebracht und die Lichtimpulse so erzeugt werden, daß sie zu dem Zeitpunkt an der rotierenden Scheibe ankommen, in welchem ihnen das gewünschte Dämpfungselement angeboten wird. Auch hier kann man noch zusätzlich mit Teilüberdeckung von Lichtwegen arbeiten. Will man das nicht, so ist ebenfalls nur eine stufenweise Änderung eder Dämpfungsfaktoren möglich. Aus den bereits unter b) genannten Gründen entstehen hierdurch jedoch keine besonderen Schwierigkeiten.

Bei den oben erwähnten Entfernungsmeßgeräten, bei denen die vom Sender erzeugten Lichtimpulse mit Hilfe eines mechanisch beweglichen Lichtweg-Umschalters voneinander unabhängig entweder als Meßlichtimpulse in den Meßlichtweg oder als Referenzlichtimpulse in den Referenzlichtweg eingespeist werden, um entsprechende, voneinander unabhängige Laufzeitmessungen durchzuführen, wird dieser Lichtwegumschalter gemäß der Erfindung gleichzeitig auch als das mechanisch bewegliche Teil verwendet, dessen Bewegung es der Dämpfungsvorrichtung ermöglicht, verschiedene Dämpfungsfaktoren zu durchlaufen. Dies ist bei allen drei oben genannten Varianten a) bis c) ohne weiteres möglich. Vorzugsweise findet die Dämpfung der Meßlichtimpulse erst nach ihrer Rückkehr vom Zielgegenstand statt, weil hierbei auch das vom Zielgegenstand bzw. seiner Umgebung in den Empfangslichtweg gelenkte Umweltlicht in derselben Weise wie das Meßlicht gedämpft wird und somit Fehler, die durch unterschiedliches Umweltlicht in der Avalanche-Diode auftreten, eliminiert werden, und gleichzeitig aber das Signal/Rauschverhältnis wesentlich verbessert wird. Um diese Dämpfung auf der Empfangsseite mit Hilfe des Lichtweg-Umschalters zu realisieren, wird der Lichtweg-Umschalter gemäß Anspruch 5 so ausgebildet, daß nicht nur das Sendelicht sondern auch das Empfangslicht auf den Lichtweg-Umschalter auftrifft und von diesem zum Empfänger weitergeleitet wird.

Die hierbei als Lichtweg-Umschalter dienende rotierende Scheibe weist demgemäß einerseits eine Vielzahl von Öffnungen, die das vom Sender kommende Licht geradlinig und ohne Teilüberdeckung als Meßlicht durchlassen, und, mit dem selben radialen Abstand von der Drehachse, eine Vielzahl von Spiegeln auf, von denen jeder geeignet ist, das vom Sender kommende Licht in den Referenzlichtweg umzulenken. Andererseits besitzt die Scheibe mit einem anderen radialen Abstand von der Drehachse eine weitere Vielzahl von Öffnungen, die sich durch den Weg des vom Zielgegenstand zurückkommenden Meßlichtes hindurchbewegen und die die verschiedenen Dämpfungswerte liefernden Filter enthalten. Es sind sowohl die das Sendelicht durchlassenden Öffnungen als auch die Spiegel und die das Referenzlicht durchlassenden Öffnungen jeweils zu gleich großen Gruppen zusammengefaßt, wobei in einer Gruppe der Empfangslichtöffnungen immer alle vorhandenen unterschiedlichen Dämpfungswerte vertreten sind. Jeder Gruppe von Sendelichtöffnungen und jeder Gruppe von Spiegeln ist eine Gruppe von Empfangslichtöffnungen in der Weise zugeordnet, daß ein durch eine bestimmte Sendelichtöffnung austretender Meßlichtimpuls bei seiner Rückkehr vom Zielgegenstand eine bestimmte Empfangslichtöffnung durchläuft, bzw. daß beim Eintreffen eines von einem bestimmten Spiegel reflektierten Referenzlichtimpulses am Empfänger dort gleichzeitig das durch eine bestimmte Empfangslichtöffnung hindurchgetretene Umgebungslicht auftrifft. Dadurch kann einerseits durch die Auswahl der « richtigen » Sendelichtöffnung für einen Meßlichtimpuls bereits die gewünschte Dämpfung festgelegt und andererseits durch « richtige » Auswahl des Spiegels für den zugehörigen Referenzlichtimpuls dafür gesorgt werden, daß die Lichtverhältnisse am Empfänger für beide Impulse einander möglichst gleichen, wobei vorausgesetzt ist, daß durch eine im Referenzlichtweg angeordnete Dämpfungseinrichtung, die ein unveränderliches Dämpfungselement und einen steuerbaren optischen Dämpfer umfaßt, die Amplitude des Referenzlichtimpulses möglichst weitgehend an die des am Empfänger eintreffenden Meßlichtimpulses angeglichen ist.

Ordnet man die oben erwähnten Gruppen von Sendelichtöffnungen und Spiegeln bzw. zugehörigen Empfangslichtöffnungen auf der Scheibe so alternierend an, daß in den Empfangslichtöffnungen die verschiedenen Filter, die in gleicher Weise in jeder Gruppe vorhanden sind, in jeder Gruppe auch die gleiche Reihenfolge besitzen, so läßt sich, nachdem durch Versuchsmessungen die richtige Dämpfung gefunden ist, zur Gewinnung mehrerer Einzelmeßwerte sowohl für die Meßlicht-Laufzeit als auch die Referenzlicht-Laufzeit, aus denen dann zur Erzielung eines einzigen besonders genauen Entfernungsmeßwertes vor oder nach der Subtraktion Mittelwerte gebildet werden, die ganze Anordnung streng periodisch so betreiben, daß mit genau gleichen Zeitabständen am Empfänger immer alternierend ein Meßlichtimpuls und ein Referenzlichtimpuls empfangen werden.

Die diese Impulse weiterverarbeitenden Analogschaltungen weisen, wie alle Analogschaltungen, die Eigenschaft auf, daß die Größe des von ihnen auf das zu verarbeitende Meßsignal aufgeprägten Fehlers vom Zeitabstand zwischen zwei aufeinanderfolgenden gleichartigen Signalverarbeitungsvorgängen abhängt. Durch die Periodizität der Ansteuerung wird nun erfindungsgemäß erreicht, daß diese Fehler mit derselben Größe in die Laufzeitwerte sowohl der Meßlichtimpulse als auch der zugehörigen Referenzlichtimpulse eingehen und sich somit bei der nachfolgenden Differenzbildung herausheben.

Darüber hinaus findet in der Zeitmeßvorrichtung eines hier in Rede stehenden Entfernungsmeßgerätes im allgemeinen ein Zeitbasissignal Verwendung, das an den verschiedensten Stellen zum Einsatz kommt und daher unvermeidlicherweise auf praktisch allen Leitungen als, wenn auch sehr kleines, periodisch schwankendes Störsignal vorhanden ist.

Betreibt man nun die Anordnung nicht mit einer beliebigen Periodizität, sondern mit einer Folgefrequenz, die ein ganzzahliges Vielfaches der Frequenz des Zeitbasissignals beträgt, so gehen auch die durch das Zeitbasissignal verursachten Störspannungen in die Analogsignale mit gleicher Amplitude ein und fallen daher bei den nachfolgenden Differenzbildungen wieder heraus, und der Zeitmeßvorgang wird vereinfacht.

Wird für das Zeitbasissignal eine genügend hohe Frequenz, beispielsweise 15 MHz gewählt, so läßt sich der oben beschriebene periodische Betrieb ohne weiteres unter Erfüllung der Bedingung durchführen, daß die Lichtimpulse die Öffnungen der rotierenden Scheibe bei voller Überdeckung mit den vorausgehenden und nachfolgenden Strahlengängen durchlaufen sollen.

Wird ein solches Entfernungsmeßgerät aus einer Batterie mit Strom versorgt, so ergibt sich ein Problem daraus, daß die verschiedenen im Gerät benötigten Spannungen mit Hilfe eines Zerhackers erzeugt werden müssen, dessen Flanken dann, wenn sie mit der Erzeugung eines eine Laufzeitmessung startenden oder beendenden Signals zusammenfallen, eine exakte Messung unmöglich machen.

Um diese Fehlerquelle zu vermeiden, ist es vorteilhaft, den Trigger-Generator zeitlich so zu steuern, daß die Lichtimpulse nicht nur zu den für die gewünschte Dämpfung richtigen Zeitpunkten auf den Lichtwegumschalter auftreffen, sondern auch so, daß überdies Beginn und Ende der Signal-Laufzeitmessungen in Zeiträume fallen, in denen keine durch Zerhacker-Flanken bedingte Störungen auftreten.

Will man das Entfernungsmeßgerät nun zur Erzielung einer besonders hohen Meßgenauigkeit in der oben beschriebenen Weise periodisch und synchron mit dem Zeitbasissignal betreiben, so läßt sich diese Bedingung nicht mehr realisieren. In diesem Fall ist es erfindungsgemäß vorgesehen, in den Zeiträumen, in die Beginn oder Ende einer Laufzeitmessung fallen, den Zerhacker auszutasten, d. h. seine Schwingungen kurzfristig zu unterdrücken und stattdessen die Stromversorgung aus einem Pufferkondensator zu speisen. Da es sich dabei auch bei großen Entfernungen nur um Zeiträume in der Größenordnung von 60 bis 70 µs handelt, ist dies ohne großen technischen Aufwand möglich.

Die Erfindung wird im folgenden anhand von Ausführungsbeispielen unter Bezugnahme auf die Zeichnung beschrieben ; in dieser zeigt :

Fig. 1 eine schematische Blockdarstellung eines Entfernungsmeßgerätes, bei dem gemäß der Erfindung die Dynamik-Steuerung mit Hilfe einer in den Sende- und Empfangs-Lichtwegen angeordneten optischen Schalt- und Dämpfungseinheit durchführbar ist,

Fig. 2 die schematische Darstellung einer ersten Ausführungsform für eine optische Schalt- und Dämpfungseinheit gemäß Fig. 1,

Fig. 3 eine zweite, besonders bevorzugte Ausführungsform für eine optische Schalt- und Dämpfungseinheit gemäß Fig. 1 und

Fig. 4 eine Frontansicht der in Fig. 3 geschnitten dargestellten Dämpfungsscheibe.

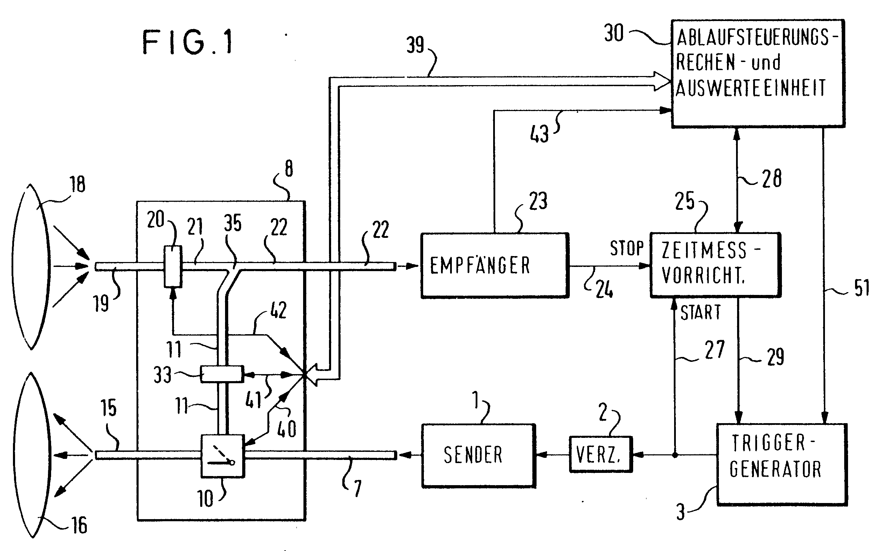

Wie in Fig. 1 wiedergegeben, besitzt ein nach dem Prinzip der Lichtimpuls-Laufzeitmessung arbeitendes Entfernungsmeßgerät einen Sender 1, der beispielsweise eine Laser-Sendediode und eine diese Sendediode mit Energie versorgende Schaltungsanordnung umfassen kann, die im wesentlichen aus einem « langsam » aufladbaren Energiespeicher in Form einer Kapazität und einem steuerbaren elektronischen Schalter besteht, der dazu dient, die im Energiespeicher angesammelte Energie schnell über die Sendediode zur Erzeugung eines Laser-Lichtimpulses zu entladen.

Die Ansteuerung dieses Schalters erfolgt durch einen Trigger-Generator 3, dessen Ausgangssignal gleichzeitig auch zum Start bzw. als Vorbereitungssignal für den Start der jeweiligen Signal-Laufzeitmessung dient. Zwischen den Trigger-Generator 3 und den Sender 1 ist ein Verzögerungsglied 2 geschaltet, das einerseits dafür sorgt, daß beispielsweise auch beim Ausmessen einer sehr kurzen Entfernung das Stop-Signal für die Laufzeitmessung einen genügend großen zeitlichen Abstand vom Start-Signal aufweist, so daß diese beiden Signale von ein und demselben Zeitmeßkanal ohne weiteres nacheinander verarbeitet werden können, und das andererseits bewirkt, daß die Signal-Laufzeitmessung vor dem Zeitpunkt und damit störungsfrei begonnen wird, in welchem der Sender auf das Triggersignal mit der Erzeugung eines sehr schnellen und vergleichsweise großen Stomstoßes durch die Sendediode reagiert, wobei sehr kräftige Störsignale erzeugt werden, die es außerordentlich schwierig machen würden, ein genau gleichzeitig mit oder kurz nach der Lichtimpuls-Erzeugung durch den Sender 1 abgegebenes Start-Signal für die Signal-Laufzeitmessung zeitlich exakt zu erfassen.

Die vom Sender 1 erzeugten Lichtimpulse werden über einen Sender-Lichtweg 7 einer optischen Schalt- und Dämpfungseinheit 8 zugeführt, die z. B. einen mechanisch beweglichen Lichtwegumschalter 10 enthält, der je nach seiner Stellung einen aus dem Sender-Lichtweg 7 austretenden Lichtimpuls entweder in einen Sende-Meßlichtweg 15 oder einen geräteinternen Referenzlichtweg 11 lenkt.

Die vom Lichtwegumschalter 10 in seiner Meßlichtstellung in den Sende-Meßlichtweg 15 eingespeisten Lichtimpulse werden zu einer Sendeoptik 16 weitergeleitet, die vereinfacht als einzelne Linse dargestellt ist und die Lichtimpulse zum Zielgegenstand aussendet, dessen Entfernung gemessen werden soll.

Der vom Zielgegenstand reflektierte Teil eines jeden Lichtimpulses wird von der in Fig. 1 ebenfalls schematisch als einzelne Linse dargestellten Empfangsoptik 18 über einen Empfangs-Meßlichtweg 19, einen in der optischen Schalt- und Dämpfungseinheit 8 enthaltenen, veränderbaren optischen Dämpfer 20 und einen Empfangslichtweg 21, 22 einem Empfänger 23 zugeführt, der beispielsweise als lichtelektrischer Wandler eine Photodiode mit einer nachgeschalteten Verstärker- und Signalerzeugungsschaltung umfaßt, die dazu dient, ein von ihr beim Empfang eines Lichtimpulses erzeugtes Signal über eine Leitung 24 einer Zeitmeßvorrichtung 25 als Stop-Signal zuzuführen, um die von dieser Zeitmeßvorrichtung durchgeführte Signal-Laufzeitmessung für den betreffenden Lichtimpuls zu beenden. Diese Signal-Laufzeitmessung war zuvor, wie oben erwähnt, korreliert mit dem vom Trigger-Generator 3 abgegebenen Triggersignal begonnen worden, das der Zeitmeßvorrichtung 25 über die Leitung 27 zuführbar ist.

Für den Fall, daß die Ausgangssignale des Trigger-Generators 3 mit einem in der Zeitmeßvorrichtung 25 erzeugten Zeitbasissignal synchronisiert werden sollen, ist eine Leitung 29 vorgesehen, durch die entsprechende Signale von der Zeitmeßvorrichtung 25 zum Trigger-Generator 3 übertragen werden können.

Die von der Zeitmeßvorrichtung 25 gewonnenen Zeitmeßergebnisse werden über die Leitungen 28 einer zentralen Ablaufsteuerungs-, Rechen- und Auswerte-Einheit 30 zugeführt, die einerseits aus diesen Laufzeit-Meßwerten die korrigierten Entfernungsmeßwerte ermittelt und zur Anzeige bringt und die andererseits die Funktionsabläufe im gesamten Meßgerät steuert. Vorzugsweise kann diese Ablaufsteuerungs-, Rechen- und Auswerte-Einheit 30 einen Mikroprozessor umfassen.

Die vom Lichtwegumschalter 10 in seiner Referenzlichtstellung in den Referenzlichtweg 11 eingespeisten Lichtimpulse durchlaufen einen gegebenenfalls steuerbaren optischen Dämpfer 33 und werden an einer Verzweigungsstelle 35 in den zum Empfänger 23 führenden Teil 22 des Empfangslichtweges geleitet. Die auf diesem Weg vom Sender 1 zum Empfänger 23 laufenden Referenz-Lichtimpulse unterliegen senderseitig bezüglich des Triggersignals und empfängerseitig bis zur Erzeugung des Stop-Signals für die Zeitmeßvorrichtung 25 denselben Verzögerungs- bzw. Signalverarbeitungszeiten wie die Meßlichtimpulse, von denen sie sich im wesentlichen lediglich hinsichtlich der Länge des zwischen dem Lichtwegumschalter 10 und der Verzweigungsstelle 35 durchlaufenen Lichtweges unterscheiden. Da die Länge dieses Referenzlichtweges 11 und damit auch die für sein Durchlaufen benötigte Zeit sehr genau bekannt ist, können mit Hilfe der Signal-Laufzeitmessung über die Referenzlichtstrecke die oben erwähnten, auch bei den Signal-Laufzeitmessungen über die Meßstrecke wirksamen Verzögerungs- und Signalverarbeitungszeiten durch eine Differenzbildung der jeweiligen Meßwerte eliminiert werden.

Ein Signalaustausch zwischen der optischen Schalt- und Dämpfungseinheit 8 und der Ablaufsteuerungs-, Rechen- und Auswerte-Einheit 30 erfolgt über die Leitung 39, die mehradrig oder bidirektional ausgebildet sein kann, so daß beispielsweise über die Leitung 40 die momentane Stellung des Lichtwegumschalters 10 betreffende Informationen an die Ablaufsteuerungs-, Rechen- und Auswerte-Schaltung 30 übermittelt und über die Leitungen 41 und 42 dem jeweiligen Betriebszustand angepaßte Befehlssignale von der Ablaufsteuerungs-, Rechen- und Auswerte-Einheit 30 an die optischen Dämpfer 20 bzw. 33 abgegeben werden können.

Bei der Erfindung kann nun der Lichtwegumschalter 10 entweder unmittelbar dazu verwendet werden, die Intensität der vom Sender 1 erzeugten und aus dem Senderlichtweg 7 austretenden Lichtimpulse zu verändern, bevor diese an die Sendeoptik 16 gelangen bzw. in den Referenzlichtweg 11 eingespeist werden, oder er kann in äußerst vorteilhafter Weise mit dem zur Dynamiksteuerung dienenden optischen Dämpfer 20 zur Erzielung einer besonders einfachen, optimal betreibbaren und sehr schnell zu äußerst exakten Meßergebnissen führenden Dynamik-Steuerungsanordnung kombiniert werden.

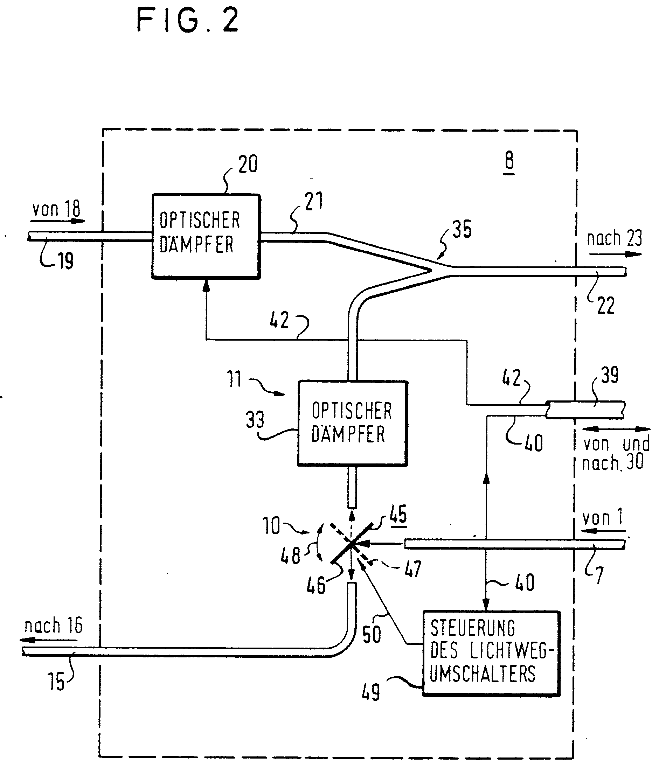

Die unmittelbare Intensitätssteuerung mit Hilfe des Lichtwegumschalters 10 wird nun anhand des in Fig. 2 dargestellten Ausführungsbeispiels erläutert. In Fig. 2 wird der Lichtwegumschalter 10 von einem Schwingspiegel 45 gebildet, der zwischen einer Meßlichtstellung 46 und einer durch eine gestrichelte Linie wiedergegebenen Referenzlichtstellung 47 periodisch hin- und herbewegbar ist, was durch den gebogenen Pfeil 48 angedeutet werden soll. Der Winkelabstand zwischen den beiden genannten Stellungen ist in Fig. 2 der Deutlichkeit halber stark übertrieben dargestellt. Tatsächlich können die beiden Stellungen wesentlich näher beieinanderliegen, so daß der Umschaltvorgang sehr schnell durchgeführt werden kann. Die Steuerung des Schwingspiegels 45 erfolgt durch eine Steuereinheit 49, wie dies durch den Pfeil 50 angedeutet ist. Die Meßlichtstellung 46 und die Referenzlichtstellung 47 des Schwingspiegels 45 zeichnen sich dadurch aus, daß in ihnen ein maximaler Anteil der bei der Emission eines Lichtimpulses aus dem Sender-Lichtweg 7 austretenden Lichtenergie in den zugehörigen Sende-Meßlichtweg 15 bzw. Referenzlichtweg 11 eingespeist wird. Um diese maximale Lichteinspeisung trotz der permanenten periodischen Bewegung des Schwingspiegels 45 sicherzustellen, müssen die Zeitpunkte, in denen der Trigger-Generator 3 jeweils ein Triggersignal abgibt, mit der Bewegung des Schwingspiegels 45 zeitlich genau korreliert werden, damit die aus dem verzögert ansprechenden Sender 1 austretenden Lichtimpulse im richtigen Moment auf den Schwingspiegel 45 auftreffen. Verschiebt man die Zeitpunkte, in denen die Triggersignale erzeugt werden, gegen diese optimalen Zeitpunkte, so lenkt der Schwingspiegel 45 immer nur einen Teil der Lichtmenge eines aus dem Sender-Lichtweg 7 austretenden Lichtimpulses in den betreffenden Lichtweg 15 oder 11. Somit läßt sich durch eine entsprechende Zeitsteuerung die Amplitude der weitergeleiteten Lichtimpulse innerhalb weiter Grenzen verändern. Zu diesem Zweck ist es vorteilhaft, wenn die Steuereinheit 49 die momentane Stellung des Schwingspiegels 45 betreffende Informationen über die Leitung 40 und der Empfänger 23 die momentane Amplitude der entsprechenden Signale betreffende Informationen über die Leitung 43 an die Ablaufsteuerungs-, Rechen- und Auswerte-Einheit liefern, die dann über die Leitung 51 an den Trigger-Generator 3 eine entsprechende zeitliche Verschiebung der Triggersignale bewirkende Steuersignale weiterleiten kann.

In diesem Fall ist es dann möglich, auf die Veränderbarkeit des im Referenzlichtweg 11 befindlichen optischen Dämpfers 33 zu verzichten und hier ein Filter mit festem Dämpfungsverhältnis vorzusehen, das die Intensität der Referenzlichtimpulse so weit reduziert, daß mit dem Schwingspiegel 45 nur innerhalb des vom Empfänger 23 verarbeitbaren Dynamikbereiches eine Anpassung der Referenzlichtintensität an die Meßlichtintensität durchgeführt werden muß.

Der optische Dämpfer 20 kann dann, wenn nicht nur die Intensität der Referenzlichtimpulse, sondern auch die der Meßlichtimpulse mit Hilfe des Schwingspiegels 45 gesteuert wird, weggelassen werden. Zur Erzielung eines guten Signal/Rausch-Verhältnisses ist es jedoch vorteilhaft, zur Dynamiksteuerung nicht die vom Meßgerät emittierten, sondern die vom Zielgegenstand reflektierten Lichtimpulse zu bedämpfen, da damit gleichzeitig auch die Umgebungshelligkeit und das durch sie bedingte Rauschen verringert wird. Diese Bedämpfung der reflektierten Lichtimpulse findet mit Hilfe des optischen Dämpfers 20 statt, der bei der Durchführung der Signal-Laufzeitmessungen über die Referenzlichtstrecke 11 außerdem dazu dient, das von der Empfangsoptik 18 zu diesen Zeiten empfangene und auf den Empfänger 23 gelangende Umgebungslicht in dem gleichen Maße zu bedämpfen, wie dies bei der jeweils zugehörigen Signal-Laufzeitmessung über die Meßlichtstrecke geschieht.

Bei Verwendung eines sich periodisch bewegenden Schwingspiegels 45 als Lichtwegumschalter 10, der beispielsweise mit einer Frequenz von 5 kHz bis 10 kHz arbeitet, können die Enden der in den Fig. 1 und 2 den Sende-Meßlichtweg 15 bzw. den Referenzlichtweg 11 bildenden Lichtleitfasern so angeordnet werden, daß die Meßlichtstellung 46 bzw. die Referenzlichtstellung 47 nicht mit den Umkehrpunkten des Schwingspiegels zusammenfällt. Dadurch läßt sich sowohl die Meßfrequenz als auch die Folgefrequenz der Referenzlichtimpulse verdoppeln, da bei jeder Vollschwingung des Spiegels 45 sowohl die Meßlichtstellung 46 als auch die Referenzlichtstellung 47 zweimal durchlaufen wird.

Statt des in Fig. 2 dargestellten Schwingspiegels 45 kann zur Erzielung einer höheren Lichtimpuls-Folgefrequenz ein Spiegelprisma verwendet werden, das gleichförmig um eine auf der Zeichenebene senkrecht stehende Achse rotiert. Von der Steuerung 49 muß dann nur für eine angenäherte Konstanz der Winkelgeschwindigkeit gesorgt und ein den Durchgang einer jeden Spiegelfläche durch eine bestimmte Winkelstellung kennzeichnendes Signal erzeugt und über die Leitung 40 an die Ablaufsteuerungs-, Rechen- und Auswerte-Einheit 30 weitergegeben werden.

Die Lichtwege 7, 11, 15, 19 und 21 sind in den Fig. 1 und 2 ausschließlich als Lichtleitfaser dargestellt, wobei vor bzw. hinter den Stirnflächen dieser Lichtleitfasern vorzusehende Kondensorbzw. Abbbildungslinsen der Einfachheit halber weggelassen sind. Auch können die Lichtleitfasern zumindest teilweise durch andere bekannte Lichtleit- und Abbildungsmittel wie z. B. Spiegel, Linsen usw. ersetzt werden.

Bei der bisherigen Schilderung der Wirkungsweise eines von einem Schwingspiegel 45 bzw. einem rotierenden Spiegelprisma gebildeten Lichtwegumschalters 10 var davon ausgegangen worden, daß nur in den Fällen, in denen wegen sehr großer Entfernung und/oder sehr geringem Reflexionsvermögen des Zielgegenstandes die maximale Senderleistung eingesetzt werden muß, der Trigger-Generator 3 zeitlich so gesteuert wird, daß durch den Lichtwegumschalter 10 die gesamte in einem Lichtimpuls enthaltene Lichtmenge in die Eintrittsöffnung des jeweils weiterführenden Lichtweges gelenkt wird. In allen anderen Fällen wird dagegen für die erforderliche optische Signaldämpfung der Trigger-Generator 3 zeitlich so gesteuert, daß die vom Sender 1 erzeugten Lichtimpulse zu einem Zeitpunkt auf den Lichtwegumschalter 10 auftreffen, in welchem dieser eine solche Stellung einnimmt, daß nur ein gewünschter Teil der im Lichtimpuls enthaltenen Lichtmenge in den weiterführenden Lichtweg gelangt, während der Rest am Eintrittsfenster des Lichtweges vorbeigelenkt und irgendwo im Meßgerät absorbiert wird.

Diese auf einer momentanen Teilüberdeckung der Lichtwege beruhende Form der optischen Signaldämpfung läßt sich bei einem die Laufzeit eines Lichtimpulses ausmessenden Entfernungsmeßgerät nur dann in sinnvoller Weise durchführen, wenn sichergestellt ist, daß der Lichtimpuls von einer quasi punktförmigen Lichtquelle emittiert wird, bzw. daß bei einer flächigen Lichtquelle nicht verschiedene Flächenbereiche nacheinander aufleuchten und dabei ihr Licht mit unterschiedlichen Winkeln beispielsweise in eine nachfolgende Lichtleitfaser einspeisen. Ist diese Bedingung nicht erfüllt, kann eine optische Dämpfung durch Teilüberdeckung dazu führen, daß der zeitliche Schwerpunkt des weitergeleiteten Lichtimpulses in Abhängigkeit von der gewählten Dämpfung, d. h. in Abhängigkeit vom Ausmaß der jeweiligen Teilüberdeckung eine zeitliche Verschiebung erfährt, die für Meßlichtimpuls und Referenzlichtimpuls unterschiedlich sein kann und sich somit bei der Subtraktion der Signal-Laufzeiten nicht heraushebt, wodurch erhebliche Meßfehler entstehen können.

Ist die obige Bedingung nicht erfüllbar, so werden gemäß einer alternativen Ausführungsform der Erfindung bei Verwendung eines Schwingspiegels oder eines rotierenden Prismas als Lichtwegumschalter für die zu dämpfenden Meß- oder Referenzlichtimpulse jeweils mehrere, funktional zueinander parallele Lichtwege vorgesehen, von denen jeder einen anderen, unveränderlichen Dämpfungswert liefert und es wird je nach den Erfordernissen der Trigger-Generator in Abhängigkeit von der Bewegung bzw. momentanen Stellung des Lichtwegumschalters 10 zeitlich so gesteuert, daß der Schwingspiegel 45 oder das rotierende Spiegelprisma den auftreffenden Lichtimpuls vollständig in den richtigen Lichtweg einspeist, wo der Lichtimpuls dann der gewünschten Dämpfung unterworfen wird, ohne daß dabei eine zeitliche Schwerpunktsverschiebung auftritt. Mit einer solchen Anordnung ist dann zwar anders als bei der Teilüberdeckung keine kontinuierliche, sondern nur eine stufenweise Änderung des Dämpfungswertes möglich. Da aber die Empfindlichkeit der Avalanche-Photodiode des Empfängers 23 durch Änderung der Versorgungsspannung beeinflußbar ist (Dämpfungswert beispielsweise 1 : 5,5) und der im Empfänger 23 enthaltene, der Avalanche-Photodiode nachgeschaltete Verstärker beispielsweise eine Dynamik von 1 : 6,6 aufweisen kann, ergibt sich für den Kanal eine Dynamik von ca. 1 : 36, so daß die einzelnen Dämpfungsstufen in den parallelen Lichtwegen sich jeweils um einen Faktor zwischen 1 : 30 und 1 : 35 voneinander unterscheiden können. Dies führt dazu, daß sich beispielsweise mit sechs parallelen Lichtwegen und der Dynamik des Verstärkers eine Gesamtdynamik von mehr als 1 : $10^9$ erreichen läßt.

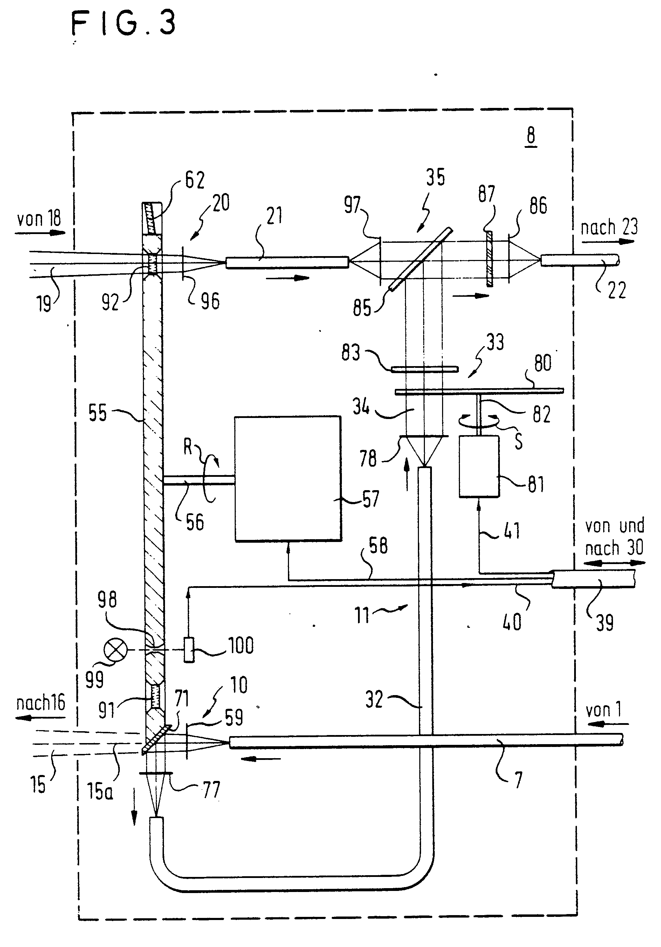

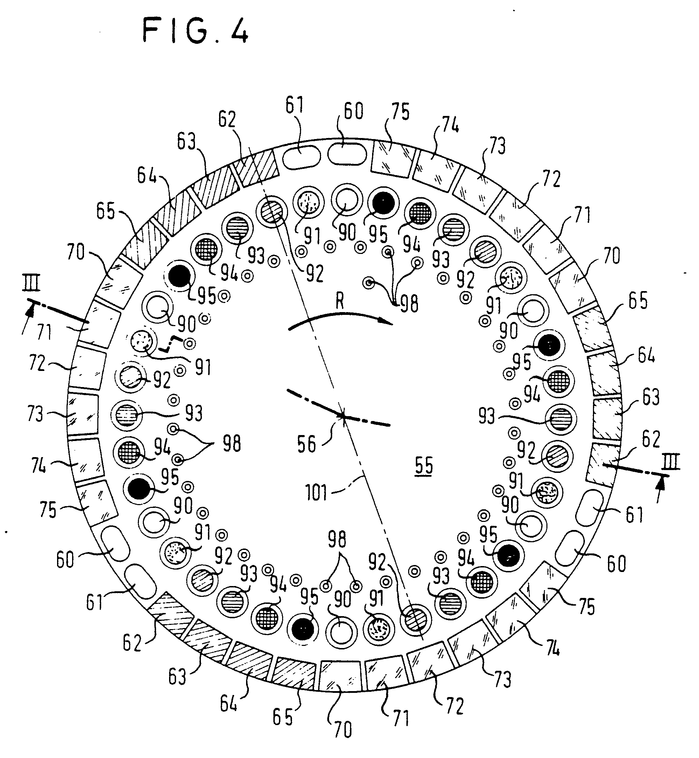

Für den Fall, daß die Ausgangsleistung des Senders noch im Verhältnis 1 : 5 veränderbar ist, erhöht sich die Kanaldynamik auf 1 : 180. Daraus ergibt sich eine entsprechende Vergrößerung des Faktors zwischen den einzelnen Dämpfungsstufen. In den Fig. 3 und 4 ist eine weitere Ausführungsform einer erfindungsgemäßen optischen Schalt- und Dämpfungseinheit 8 dargestellt, bei der eine rotierende Scheibe 55 Verwendung findet, die in besonders vorteilhafter Weise sowohl den hinter dem Sender-Lichtweg 7 befindlichen Lichtwegumschalter 10 als auch den zwischen dem Empfangs-Meßlichtweg 19 und dem Empfangslichtweg 21 angeordneten, veränderbaren optischen Dämpfer 20 in einem einzigen Bauteil miteinander vereinigt. Wie man der Fig. 3 entnimmt, in der die rotierende Scheibe 55 in einem der Linie III-III aus Fig. 4 folgenden Schnitt dargestellt ist, wird die Scheibe 55 über eine Welle 56 von einem Motor 57 so angetrieben, daß sie beständig in Richtung des Pfeiles R rotiert.

Die angenäherte Konstanz der Winkelgeschwindigkeit dieser Rotation kann entweder durch eine beim Motor 57 befindliche bekannte Regelschaltung oder durch die zentrale Ablaufsteuerungs-, Rechen- und Auswerte-Einheit 30 überwacht und sichergestellt werden, die dann mit dem Motor 57 über die Leitung 58 entsprechende Informations- und Befehlssignale austauscht.

Die rotierende Scheibe 55 ist so angeordnet, daß sie mit ihrem äußersten Umfangsbereich in den Strahlengang des Lichtes eingreift, das aus dem hier als Lichtleitfaser dargestellten Sender-Lichtweg 7 austritt und von einer in Fig. 3 nur symbolisch durch ihre Mittelachse angedeuteten Linse 59 mit verringerter Divergenz weitergeleitet wird.

In diesem äußersten Bereich besitzt die Scheibe 55 einander abwechselnde Gruppen von Öffnungen 60 bis 65 und Spiegeln 70 bis 75. Die beiden ersten Öffnungen 60 und 61 einer jeden Gruppe sind als in Umfangsrichtung der Scheibe 55 verlängerte Löcher ausgebildet. Wird der Trigger-Generator 3 so angesteuert, daß er unter Berücksichtigung der entsprechenden Verzögerungen den Sender 1 zur Abgabe eines Lichtimpulses gerade dann veranlaßt, wenn sich eine dieser Öffnungen 60, 61 im Strahlengang hinter dem Sender-Lichtweg 7 befindet, so gelangt dieser Lichtimpuls völlig ungedämpft über den als freier Strahlengang dargestellten Sende-Meßlichtweg 15 zur Sendeoptik 16 und von dort weiter zum Zielgegenstand. Die übrigen Öffnungen 62 bis 65 enthalten jeweils ein Dämpfungsfilter, das einen vergleichsweise geringen Dämpfungsfaktor beispielsweise von 1 : 10 liefert und die optische Achse des Strahlengangs 15 unter einem von 90° abweichenden Winkel schneidet.

Diese Dämpfungsfilter haben folgenden Zweck : In den Fällen, in denen mit dem Entfernungsmeßgerät ein in vergleichsweise geringer Entfernung befindlicher Zielgegenstand angemessen werden soll, der einen Retroreflektor trägt, kann es bei ungünstiger Stellung des Retroreflektors geschehen, daß derjenige Teil eines Lichtimpulses, der an der Empfangsoptik 18 und insbesondere an der Stirnfläche der Lichtleitfaser 21, die hier den zur Verzweigungsstelle 35 führenden Teil des Empfangslichtweges bildet, reflektiert wird, über den Retroreflektor zurück zur Sendeoptik 16 gelangt und von dieser auf das Stirnende der Lichtleitfaser fokussiert wird, die den Sender-Lichtweg 7 bildet. Ohne die in den Öffnungen 62 bis 65 vorgesehenen Dämpfungsfilter würde der an dieser Stirnfläche erneut reflektierte Teil des Lichtimpulses mit einer genügend großen Amplitude über den gesamten Meßlichtweg bis zum Empfänger 23 laufen, um dort als verzögerter Störlichtimpuls den durch den eigentlichen Meßlichtimpuls ausgelösten Signalverarbeitungsvorgang so zu stören, daß es zu Fehlmessungen kommt bzw. eine einwandfreie Zeitabstandsmessung völlig unmöglich gemacht wird. Dies wird durch die in den Öffnungen 62 bis 65 angebrachten, schrägstehenden Dämpfungsfilter verhindert. Diese Öffnungen werden nämlich zur Aussendung von Meßschüssen immer dann benutzt, wenn keine sehr großen Entfernungen ausgemessen werden sollen, d. h. also wenn die Gefahr besteht, daß der eben geschilderte Störimpuls ohne weitere Maßnahmen eine zur Störung der Messung ausreichende Amplitude besitzt. In diesen Fällen, in denen das vom Sender 1 abgegebene Licht ohnehin gedämpft werden muß, stellt es keinerlei Problem dar, das Senderlicht bereits vor seinem Austreten aus dem Meßgerät um den durch die in Rede stehenden Dämpfungsfilter verursachten Faktor 1 : 10 zu dämpfen. Kommt dann der von den optischen Empfangseinrichtungen reflektierte Lichtanteil wieder zur Sendeoptik 16 zurück, so durchläuft er bei seiner Projektion auf die Stirnfläche der Lichtleitfaser 7 das in seinem Lichtweg befindliche Dämpfungsfilter ein erstes Mal, wobei er ebenso wie bei der Reflexion am Stirnende der Lichtleitfaser 7 und beim nochmaligen Hindurchtreten durch das Dämpfungsfilter jeweils im Verhältnis 1 : 10 geschwächt wird, so daß sich insgesamt eine Dämpfung um einen Faktor $10^{-3}$ ergibt. Der auf diese Weise geschwächte Störlichtimpuls ist in keinem Falle mehr in der Lage, am Empfänger 23 eine Störung der Signalverarbeitung des vorausgegangenen Meßlichtimpulses zu bewirken. Durch die Schrägstellung der Dämpfungsfilter in den Öffnungen 62 bis 65 wird verhindert, daß an der Oberfläche der Filter reflektierte Lichtanteile zur Sendeoptik 16 gelangen und somit selbst zu Störsignalen werden können.

Die beiden Löcher 60 und 61, die jeweils zur Aussendung von Meßschüssen für weit entfernte Zielgegenstände benutzt werden, weisen keine derartigen Dämpfungsfilter auf, da hier wegen der großen Entfernung die oben beschriebene Ausbildung von Störreflexen keine Rolle spielt. Die längliche Ausbildung dieser beiden Öffnungen 60 und 61 ermöglicht überdies die Meßschüsse für diese großen Entfernungen so frühzeitig zu erzeugen, daß trotz der großen Entfernung die am Zielgegenstand reflektierten Lichtimpulse an dem den optischen Dämpfer 20 bildenden Teil der rotierenden Scheibe 55 und insbesondere am Empfänger 23 zur rechten Zeit eintreffen, wie dies unten noch genauer erläutert wird.

Auf jede Gruppe von Löchern 60 bis 65 folgt im äußeren Bereich der rotierenden Scheibe 55 eine gleich große Gruppe von Spiegeln 70 bis 75, die, wie man insbesondere der Fig. 3 entnimmt, an der Scheibe 55 so angebracht sind, daß ihre reflektierende Oberfläche beim Durchlaufen des Strahlengangs 15 unter einem Winkel von 45° zur optischen Achse dieses Strahlengangs steht. Wird der Trigger-Generator 3 so angesteuert, daß er den Sender 1 dazu veranlaßt, in einem Zeitpunkt einen Lichtimpuls abzugeben, in dem sich einer der Spiegel 70 bis 75 in der eben beschriebenen und in Fig. 3 für den Spiegel 71 dargestellten Stellung befindet, so wird dieser Lichtimpuls am Spiegel um 90° umgelenkt und von einer Linse 77 auf das Stirnende einer in Fig. 3 den vorderen Abschnitt des Referenzlichtweges 11 bildenden Lichtleitfaser 32 fokussiert.

Der so erzeugte Referenzlichtimpuls tritt am anderen Ende der Lichtleitfaser 32 aus, wird von einer Linse 78 in ein paralleles Lichtbündel umgewandelt und durchläuft einen steuerbaren optischen Dämpfer 33, der hier von einer Graukeilscheibe 80 gebildet wird, die zur Erzielung eines gewünschten Dämpfungswertes mit Hilfe eines Schrittmotors 81 um ihre Achse 82 in beiden Richtungen verstellt werden kann, wie dies durch den Doppelpfeil S angedeutet ist. Hinter dem veränderbaren optischen Dämpfer 33 durchläuft der Referenzlichtimpuls ein Dämpfungsfilter 83, das ein fest vorgegebenes Dämpfungsverhältnis aufweist, um dann an der Verzweigungsstelle 35 mit Hilfe eines teildurchlässigen Spiegels 85 über ein Interferenzfilter bzw. ein in der Mittenfrequenz abstimmbares Interferenzfilter 87 in den zum Empfänger 23 führenden Teil 22 des Empfangslichtweges eingekoppelt zu werden. Zu diesem Zweck wird das parallele Lichtbündel mit Hilfe einer Linse 86 auf das Stirnende der diesen Teil des Empfangslichtweges bildenden Lichtleitfaser fokussiert.

Der optische Dämpfer 33 kann auch von einem PLZT- oder einem PLMNZT-Scheibchen gebildet werden.

In einem radial weiter innen liegenden Bereich weist die rotierende Scheibe 55 aufeinanderfolgende Gruppen von Öffnungen 90 bis 95 auf, wobei jede dieser Gruppen sechs Öffnungen, d. h. ebenso viele Öffnungen umfaßt, wie die oben beschriebenen Öffnungs- bzw. Spiegelgruppen im äußeren Randbereich der Scheibe 55 Öffnungen bzw. Spiegel aufweisen.

Die eben genannten weiter innen liegenden Öffnungen 90 bis 95 sind so angeordnet, daß sie bei der Drehung der Scheibe 55 den von der Empfangsoptik 18 zum Teil 21 des Empfangslichtweges führenden Empfangs-Meßlichtweg 19 an einer Stelle durchlaufen, an der der Querschnitt des Strahlengangs 19 mit Sicherheit kleiner als der Durchmesser der Öffnungen 90 bis 95 ist. In Lichtimpuls-Laufrichtung hinter der rotierenden Scheibe 55 ist eine Linse 96 angeordnet, die das Licht auf das Stirnende einer den Eingangsteil des Empfangslichtweges bildenden Lichtleitfaser 21 fokussiert. Das am anderen Ende dieser Lichtleitfaser 21 austretende Meßlicht wird durch eine weitere Linse 97 in der gleichen Weise in ein paralleles Lichtbündel umgewandelt, wie dies oben für das Referenzlicht und die Linse 78 beschrieben wurde.

Hierauf durchläuft das Meßlicht den schräg stehenden teildurchlässigen Spiegel 85 geradlinig d. h. mit einer sehr geringen Abschwächung und gelangt über das Interferenzfilter 87 zur Linse 86, von der es auf die Stirnfläche der Lichtleitfaser fokussiert wird, die den zum Empfänger 23 führenden Teil 22 des Empfangslichtweges bildet.

Jede der Öffnungen 90 gestattet einen ungedämpften Durchtritt des Empfangslichtes, während in den Öffnungen 91 bis 95 Filter mit unterschiedlichen Dämpfungsverhältnissen angebracht sind. Dabei ist wesentlich, daß von Gruppe zu Gruppe alle Löcher 91, alle Löcher 92, alle Löcher 93, alle Löcher 94 und alle Löcher 95 jeweils ein Filter mit demselben Dämpfungswert aufweisen.

Bei Verwendung dieser rotierenden Scheibe durchläuft also das Meßlicht das zur Dynamiksteuerung auf der Empfängerseite gedämpft wird, nur einen einzigen Lichtweg, der vom Sende-Meßlichtweg 15 über die Sendeoptik 16, den Zielgegenstand, die Empfangsoptik 18, den Empfangs-Meßlichtweg 19 und den vorderen Teil 21 des Empfangslichtweges 21, 22 zur Verzweigungsstelle 35 und von dort weiter zum Empfänger 23 führt. Dennoch wird hier zur Dämpfung nicht mit einer Teilüberdeckung von Lichtwegen im Augenblick des Durchtritts des jeweiligen Lichtimpulses gearbeitet.

Statt dessen wird der Trigger-Generator 3 zeitlich so gesteuert, daß er den Sender 1 zur Abgabe von Meßlichtimpulsen genau zu einem solchen Zeitpunkt veranlaßt, in dem nicht nur eine der das Senderlicht durchlassenden Öffnungen 60 bis 65 voll deckend im Strahlengang des Sende-Meßlichtweges 15 sondern auch eine der Öffnungen 90 bis 95 voll deckend im Strahlengang des Empfangs-Meßlichtweges 19 steht. Bei kurzen und mittleren Entfernungen ist diese Volldeckung praktisch gleichzeitig gegeben, da sich die Scheibe 55 bei einer bevorzugten Drehzahl von ca. 130 U/s in der Zeit praktisch nicht weiterbewegt, die der Meßlichtimpuls benötigt, um diese kurzen und mittleren Entfernungen zu durchlaufen. Nur bei weiten und sehr weiten Entfernungen (bis 10 km) spielt die Drehbewegung der Scheibe 55 bezüglich der Laufzeit der Meßlichtimpulse eine Rolle. Dies ist auch einer der Gründe, warum die für das Aussenden der Meßlichtimpulse für große und sehr große Entfernungen, verwendeten Öffnungen 60 und 61 einer jeden Gruppe in Umfangsrichtung der Scheibe 55 so verlängert ausgebildet sind, daß auch ein mit einem Vorhalt von ca. 3,1° abgegebener Lichtimpuls diese Öffnungen unbehindert durchlaufen kann. Hierdurch ist es möglich, den Meßlichtimpuls jeweils so frühzeitig abzugeben, daß er bei der Rückkehr vom Zielgegenstand die entsprechende Öffnung 90 bzw.91 gerade in ihrer voll deckenden Stellung antrifft.

Die zur Dynamiksteuerung erforderlichen unterschiedlichen Dämpfungen werden bei dieser Ausführungsform dadurch erzeugt, daß durch die Rotationsbewegung der den Lichtwegumschalter 10 bildenden Scheibe 55 permanent in ein und denselben Lichtweg Filter mit unterschiedlichen Dämpfungsfaktoren gebracht werden und daß der Trigger-Generator 3 in Abhängigkeit von der Bewegung der Scheibe 55 zeitlich so gesteuert wird, daß er den Sender zu Zeitpunkten triggert, die gewährleisten, daß der daraufhin emittierte Meßlichtimpuls bei seiner Rückkehr vom Zielgegenstand gerade das den momentan gewünschten Dämpfungsfaktor liefernde Filter in einem der Löcher 90 bis 95 vorfindet. Damit der Meßlichtimpuls zu dem jeweiligen Zeitpunkt auch auf der Senderseite durch die rotierende Scheibe 55 hindurchtreten kann, ist dort eine Anzahl von Öffnungen 60 bis 65 vorgesehen, gesehen, die der Anzahl der die verschieden Dämpfungen liefernden Öffnungen 90 bis 95 je Gruppe auf der Empfängerseite entspricht.

Bei einer Anordnung, bei der sich, wie in Fig. 3 dargestellt, Sende-Meßlichtstrecke 15 und Empfangs-Meßlichtstrecke 19 bezüglich des Drehmittelpunktes der Scheibe 55 genau diametral gegenüberliegen, sind wegen der oben erwähnten « Gleichzeitigkeit », mit der jeweils eine der Sendelichtöffnungen 60 bis 65 und die zugehörige der Empfangslichtöffnungen 90 bis 95 die volle Überdeckung mit den zugehörigen Strahlengängen erreichen, jeweils die Mitte einer Sendelichtöffnung 60, 61, 62, 63, 64, 65 und die Mitte der zugehörigen Empfangslichtöffnung 90, 91, 92, 93, 94, 95 auf einem gemeinsamen Scheibendurchmesser angeordnet, wie dies in Fig. 4 für eine der Öffnungen 62 und die zugehörige Öffnung 92 durch eine strichpunktierte Linie 101 angedeutet ist. Dabei ist die radial unmittelbar innerhalb der Sendelichtöffnung 62 befindliche Empfangslichtöffnung 92 nicht dieser Sendelichtöffnung sondern dem diametral gegenüberliegenden Spiegel 72 zugeordnet.

Auch den übrigen Spiegeln 70, 71 und 73 bis 75 einer jeden Gruppe ist jeweils eine diametral gegenüberliegende Empfangslichtöffnung 90, 91 und 93 bis 95 zugeordnet, wobei jede dieser Empfangslichtöffnungen ein Filter mit demselben Dämpfungsfaktor enthält, wie die entsprechend numerierte Empfangslichtöffnung, die einer gegenüberliegenden Sendelichtöffnung zugeordnet ist.

Sinn dieser Anordnung ist es, auch die Referenzlichtimpulse zu ganz bestimmten Zeitpunkten, die wieder von der Bewegung bzw. der momentanen Stellung der rotierenden Scheibe 55 abhängen, auszulösen. Ein Grundprinzip der erfindungsgemäßen Vorrichtung besteht darin, für Meßlichtimpulse und Referenzlichtimpulse, deren Laufzeiten zur Gewinnung der gesuchten Entfernungswerte voneinander abgezogen werden sollen, die Laufzeitmessungen unter möglichst identischen Bedingungen durchzuführen. Dazu gehört nicht nur eine sehr weitgehende Anpassung der Lichtintensität der Referenzlichtimpulse an die der zugehörigen Meßlichtimpulse, was mit Hilfe des steuerbaren optischen Dämpfers 33 geschieht, sondern auch eine Anpassung der jeweiligen Hintergrundshelligkeit. Zu diesem Zweck werden die Referenzlichtimpulse nicht dann ausgelöst, wenn irgendeiner der Spiegel 70 bis 75 im Austrittsstrahlengang des Sender-Lichtweges 7 steht ; vielmehr wird immer derjenige der Spiegel 70 bis 75 benutzt, dem auf der gegenüberliegenden Seite der Scheibe 55 eine Empfangslichtöffnung zugeordnet ist, die dasselbe Filter enthält wie diejenige Empfangslichtöffnung, durch die der zugehörige Meßlichtimpuls hindurchtritt. Damit ist sichergestellt, daß der Empfänger 23 beim Empfang des Referenzlichtimpulses dieselbe Umwelthelligkeit « sieht » und damit dasselbe zeitliche Ansprechverhalten aufweist, wie beim Empfang des zugehörigen Meßlichtimpulses.

Ähnlich wie bei der oben beschriebenen ebenfalls nicht mit Teilüberdeckungen arbeitenden Dynamiksteuerung, bei der die Lichtimpulse in unterschiedliche, funktional zueinander parallele aber mit verschiedenen Dämpfungsfiltern ausgerüstete Lichtwege gelenkt werden, ist auch hier mit Hilfe der Scheibe 55 nur eine stufenweise Änderung der Dämpfung möglich, was aber, wie oben bereits erläutert, wegen der in jedem Fall zur Verfügung stehenden Dynamik des Empfängers 23 keine besonderen Schwierigkeiten bietet.

Um die momentane Lage der Scheibe 55 bestimmen und damit auch die Ansteuerzeitpunkte für den Trigger-Generator 3 richtig wählen zu können, weist die Scheibe 55 radial noch weiter innen eine Vielzahl von Löchern 98 auf, von denen jeweils eines einem Radialstrahl zugeordnet ist, auf dem die Mitte einer der Öffnungen 90 bis 95 und der Öffnungen 60 bis 65 bzw. der Spiegel 70 bis 75 liegt. Diese Löcher 98 dienen dazu, mit Hilfe der in Fig. 3 dargestellten, von einer Lichtquelle 99 und einer Differential-Photodiode 100 gebildeten Lichtschranke über die Leitung 40 die jeweilige Stellung der rotierenden Scheibe 55 kennzeichnende Signale an die zentrale Ablaufsteuerungs-, Rechen- und Auswerteeinheit 30 abzugeben, die dann ihrerseits den Trigger-Generator 3 über die in Fig. 1 dargestellte Leitung 51 zeitlich richtig ansteuert.

Eines der Löcher 98 kann, wie in Fig. 4 gezeigt, einen anderen Abstand von der Drehachse 56 aufweisen als die übrigen Löcher 98 und durch eine eigene, nicht dargestellte Lichtschranke abgetastet werden, durch die bei jeder Umdrehung der Scheibe 55 ein eindeutiges Lagesignal für die Ablaufsteuerungs-, Rechen- und Auswerteeinheit 30 erzeugt wird. Soll nun mit einem erfindungsgemäß aufgebauten Entfernungsmeßgerät die zunächst völlig unbekannte Entfernung eines Zielgegenstandes mit unbekanntem Reflexionsvermögen Gestimmt werden, so muß zuerst durch das Meßgerät selbst die richtige Dämpfung gefunden werden, damit exakte Meßergebnisse (Genauigkeit ± 1 mm bei Entfernungen bis zu 10 km) gewonnen werden können.

Geht man davon aus, daß der im Empfänger 23 der Empfangsphotodiode nachgeschaltete Verstärker Signale zwischen 175 mV und 1150 mV mit ausreichender Linearität verstärken und einer weiteren Verarbeitung zuführen kann, was einer Dynamik von ca. 1 : 6,6 entspricht, und daß die Empfindlichkeit der Empfangsphotodiode durch Änderung der Versorgungsspannung um einen Faktor 1 : 5,5 veränderbar ist, so ergibt sich ein vom Empfänger 23 verarbeitbarer Dynamikbereich von ca. 1 : 36,3 und es muß durch eine entsprechende Dämpfung der zur Erzielung einer großen Reichweite möglichst hell gewählten Meßlichtimpulse dafür gesorgt werden, daß die am Empfänger 23 ankommenden Signale in diesem verarbeitbaren Helligkeitsbereich liegen. Diese Dämpfung erfolgt zum einen Teil durch die Meßstrecke und das Reflexionsvermögen des Zielgegenstandes (Außendämpfung) und zum anderen Teil zum Ausgleich der hierbei möglichen Unterschiede, die in der Größenordnung von $1 : 10^9$ bis $1 : 10^{10}$ liegen können, durch die erfindungsgemäße zeitliche Steuerung des Trigger-Generators 3 in Abhängigkeit von der Bewegung der Scheibe 55 (Innendämpfung) sowie unter Umständen mit Hilfe einer Änderung der vom Sender 1 abgegebenen Leistung (zusätzliche Kanaldämpfung).

Ist die Senderleistung nicht veränderbar, so geht das Meßgerät zum Herausfinden der richtigen Innendämpfung zunächst von einer sehr großen Entfernung des Zielgegenstandes und einer hohen Außendämpfung aus und sendet versuchsweise einen ersten Meßlichtimpuls durch eine der Öffnungen 60 mit einem einer großen Entfernung entsprechenden Vorhalt aus, so daß der reflektierte Lichtimpuls durch die keine Dämpfung bewirkende zugehörige Öffnung 90 zurückkommt. Dabei ist die Empfangsphotodiode auf maximale Empfindlichkeit geschaltet.

Der Empfänger 23 umfaßt in an sich bekannter Weise einen Komparator, der überwacht, ob das zu verstärkende Ausgangssignal der Empfangsphotodiode bzw. eines ihr nachgeschalteten Schwingkreises die obere Grenze von 1150 mV übersteigt. Ist dies nicht der Fall, so bedeutet dies, daß tatsächlich ein sehr weit entfernter und/oder schlecht reflektierender Zielgegenstand angemessen wurde und daß der richtige Innendämpfungswert, nämlich 1 : 1 bereits gefunden ist.

Gibt der Komparator jedoch ein Übersteuerungssignal ab, weil die 1 150 mV überschritten wurden, so wird durch die zentrale Ablaufsteuerungs-, Rechen- und Auswerteeinheit 30 einerseits der auf diese Weise gewonnene Zeitmeßwert verworfen, weil er mit Sicherheit mit einem zu großen Meßfehler behaftet ist, und andererseits die Empfindlichkeit der Empfangsphotodiode im Verhältnis 1 : 5,5 verringert. Dies erfolgt so schnell, daß bereits durch die nächste, durch den Sende-Meßlichtweg 15 hindurchlaufende Öffnung 60 ein zweiter Meßlichtimpuls abgegeben werden kann, der dann wieder durch die zugehörige, keine Dämpfung bewirkende Öffnung 90 zum Empfänger 23 gelangt.

Spricht der Übersteuerungskomparator wieder an, so wird auch dieser Meßwert verworfen, die Empfindlichkeit der Empfangsphotodiode wieder auf den hohen Wert geschaltet und der nächste Meßlichtimpuls so ausgesandt, daß er daß Meßgerät durch eine der Öffnungen 61 verläßt und durch die zugehörige Öffnung 91 zurückkehrt, in der sich ein Filter mit einem Dämpfungsfaktor von 1 : 30 befindet. Damit ist für den Fall, daß beim vorausgehenden Meßlichtimpuls der Schwellenwert von 1150 mV nur geringfügig überschritten wurde, sichergestellt, daß der im Empfänger 23 enthaltene Verstärker nunmehr nicht ein zu kleines, d. h. unter die untere Grenze von 175 mV fallendes, sondern ein innerhalb des angestrebten Arbeitsbereiches liegendes Signal erhält.

Sollte auch bei diesem dritten Versuch der Übersteuerungskomparator ansprechen, so wird der nächste Meßlichtimpuls wieder durch eine der Öffnungen 61 emittiert und die zugehörige Öffnung 91 empfangen, wobei allerdings die Empfindlichkeit der Empfangsphotodiode wieder im Verhältnis 1 : 5,5 verringert ist.

Führt auch dies zu einer Übersteuerung des Empfänger-Verstärkers, so wird die Empfindlichkeit der Empfangsphotodiode wieder erhöht und der nächste Meßlichtimpuls durch eine der Öffnung 62 abgegeben, die, wie oben ausführlich geschildert, zur Unterdrückung von störenden Lichtreflexen ein schrägstehendes Filter mit einem Dämpfungsfaktor 1 : 10 enthält. Diese Dämpfung des ausgesandten Meßlichtes ist deswegen ohne weiteres vertretbar, weil die vorausgehenden Meßversuche ja gezeigt haben, daß eine Dämpfung von 1 : 30 nicht ausreicht, um eine Übersteuerung des Empfänger-Verstärkers zu vermeiden. Der reflektierte Lichtimpuls gelangt dann durch die zur Öffnung 62 gehörende Öffnung 92 zum Empfänger 23, in der ein Filter mit einem Dämpfungsfaktor von 1 : 100 angeordnet ist, so daß dieser Lichtimpuls insgesamt eine Innendämpfung von 1 : 1 000 erfahren hat. Dieser Dämpfungswert ist gerade so gewählt, daß er etwas kleiner als das Produkt aus dem Dämpfungswert der vorausgehenden Empfangslichtöffnung, in diesem Fall der Empfangslichtöffnung 91, und aus dem Dynamikwert des Empfängers 23 ist. Das gleiche gilt auch für die Dämpfungswerte in den nachfolgenden Empfangslichtöffnungen 93 bis 95, die jeweils ein Filter mit einem Dämpfungsfaktor 1 : $3 \cdot 10^3$, 1 : $10^5$ bzw. 1 : $3 \cdot 10^6$ enthalten, was in Verbindung mit den in den zugehörigen Sendelichtöffnungen 63, 64 und 65 enthaltenen Dämpfungsfiltern Gesamt-Innen-Dampfungsfaktoren von 1 : $3 \cdot 10^4$, 1 : $10^6$ bzw. 1 : $3 \cdot 10^7$ ergibt, so daß sich unter Berücksichtigung des Dynamikbereichs des Empfängers 23 eine Gesamtdynamik von mehr als 1 : $10^9$ erzielen läßt.

Spricht der Übersteuerungskomparator auch bei dem durch die Sendelichtöffnung 62 abgegebenen und die zugehörige Empfangslichtöffnung 92 empfangenen Meßlichtimpuls an, so kann zunächst wieder die Empfindlichkeit der Empfangsphotodiode verringert und insgesamt das oben beschriebene Verfahren unter Verwendung immer höherer Dämpfungsstufen in den nachfolgenden Öffnungen 93 bis 95 fortgesetzt werden, bis schließlich der Übersteuerungskomparator nicht mehr anspricht und der richtige Dämpfungswert gefunden ist.

Ist die Senderleistung ebenfalls veränderbar, beispielsweise im Verhältnis 1 : 5, so wird jedesmal dann, wenn bei einer durch eine der Öffnungen 90 bis 95 gegebenen Dämpfung und bei auf minimale Empfindlichkeit geschalteter Empfangsdiode der Übersteuerungskomparator anspricht, vor dem Hochschalten der Empfindlichkeit und der Verwendung des nächst stärkeren Dämpfungsfilters in einer der Öffnungen 91 bis 95 zunächst ein weiterer Meßversuch mit verringerter Senderleistung unternommen. Da hierbei durch Umschalten des Empfängers und des Senders insgesamt ein Dynamikbereich von 1 : 180 erzielbar ist, können in der Scheibe 55 in den Öffnungen 91 bis 95 sich in ihren Dämpfungswerten entsprechend stärker voneinander unterscheidende Filter vorgesehen und somit ein noch größerer Gesamt-Dynamikbereich abgedeckt werden. Bei gleichbleibendem Gesamt-Dynamikbereich kann die Anzahl der verschiedene Dämpfungsfilter aufweisenden Öffnungen, d. h. die Anzahl der Öffnungen je Gruppe verkleinert und eine entsprechend höhere Anzahl von Meß- und Referenz-, lichtimpulsen je Umdrehung der Scheibe 55 abgegeben werden.

Im Empfänger 23 ist außer den bereits genannten Schaltungen eine Amplitudenverstärkungs- und Gleichrichtschaltung vorgesehen, der das verstärkte Ausgangssignal des der Empfangsphotodiode nachgeschalteten Schwingkreises zugeführt wird. Ist für den Meßlichtimpuls die richtige Dämpfung gefunden, so wird das dabei von diesem Gleichrichter abgegebene Gleichspannungssignal in einer Sampleand-Hold-Schaltung solange festgehalten, bis es durch einen Analog/Digital-Wandler in einen digitalen Zahlenwert umgesetzt worden ist, der dann wieder der zentralen Ablaufsteuerungs-, Rechen- und Auswerteeinheit 30 zugeführt und dort gespeichert wird.

Gemäß einem besonders bevorzugten Verfahren wird nun zur Ermittlung eines besonders exakten Entfernungsmeßwertes mit der gefundenen Dämpfung immer alternativ ein Meßlichtimpuls und ein Referenzlichtimpuls erzeugt und außerdem zwischen jeweils zwei aufeinanderfolgenden Lichtimpuls-Laufzeitmessungen noch eine Eichmessung in der Zeitmeßvorrichtung 25 vorgenommen.

Dabei werden, wie oben schon erwähnt, die Referenzlichtimpulse über denjenigen der Spiegel 70 bis 75 umgelenkt, dem diejenige der Öffnungen 90 bis 95 zugeordnet ist, die ein Dämpfungsfilter mit demselben Dämpfungsfaktor aufweist, der auch bei der Meßlicht-Laufzeitmessung Verwendung findet, damit die Umwelthelligkeit bei den Meßlichtimpulsen und bei den Referenzlichtimpulsen in derselben Weise bedämpft wird.

Zur Anpassung der Amplitude der Referenzlichtimpulse an die Amplitude der Meßlichtimpulse sind, wie bereits erwähnt, im Referenzlichtweg 11 ein festes Dämpfungsfilter 83 mit unveränderlichem Dämpfungsfaktor und ein optischer Dämpfer 33 mit veränderlichem Dämpfungsfaktor angeordnet.

Für die Meßlichtimpulse muß, wie bereits erwähnt, die Innendämpfung innerhalb eines sehr großen Bereiches verändert werden, da sich die Außendämpfung in einem entsprechend großen Bereich ändern kann. Das angestrebte Ziel ist dabei immer das Verhältnis der kleinsten zur maximalen auf die Empfangsphotodiode auftreffenden Lichtintensität in dem vom Empfänger 23 verarbeitbaren Dynamikbereich von 1 : 36 zu halten, das gegebenenfalls noch mit dem Verhältnis (1 : 5) zu multiplizieren ist, das durch die Umschaltung der Senderleistung erzielt werden kann ; dies wird dadurch erreicht, daß bei großer Außendämpfung eine entsprechend kleine Innendämpfung und gegebenenfalls eine hohe Senderleistung und umgekehrt bei kleiner Außendämpfung eine entsprechend große Innendämpfung und gegebenenfalls eine kleine Senderleistung gewählt wird.

Aus diesem Grund kann die Änderung der Amplitude der an der Empfangsphotodiode eintreffenden Meßlichtimpulse höchstens in einem Bereich von 1 : 36 bzw. 1 : 180 liegen und der im Referenzlichtweg eingebaute steuerbare optische Dämpfer 33 muß lediglich in der Lage sein, die Referenzlichtimpulse in diesem Verhältnis abzuschwächen, während der restliche Bereich von 1 : $3 \cdot 10^7$ von dem festen Dämpfungsfilter 83 und dem schrägstehenden, teildurchlässigen Spiegel 85 erledigt werden kann. Nimmt man beispielsweise an, daß der schrägstehende Spiegel, was für eine möglichst geringe Bedämpfung des Meßlichtes erforderlich ist, 99 % des auftreffenden Lichtes geradlinig durchläßt und nur 1 % ablenkt, d. h. also für das Referenzlicht einen Dämpfungsfaktor von 1 : 100 liefert, so muß das Dämpfungsfilter 83 einen Dämpfungsfaktor von etwa $3 \times 10^{-5}$ besitzen.

Im Restbereich von 1 : 36 bzw. 1 : 180 erfolgt die Anpassung der Amplituden der Referenzlichtimpulse an die der Meßlichtimpulse dadurch, daß auch das von dem oben erwähnten Gleichrichter beim Empfang eines Referenzlichtimpulses abgegebene Gleichspannungssignal in der Sample-and-Hold-Schaltung zwischengespeichert und digitalisiert und der so erhaltene Digitalwert mit dem zuvor gewonnenen Digitalwert des zugehörigen Meßlichtimpulses verglichen wird. Ist die Abweichung größer als ein vorgegebener Toleranzbereich, so wird mit entsprechenden über die Leitung 41 zugeführten Befehlssignalen der Schrittmotor 81 so verstellt, daß die Graukeilscheibe 80 den nächsten Referenzlichtimpuls in der richtigen Weise abschwächt.

Sind auf diese Weise sowohl für die Meßlichtimpulse als auch für die Referenzlichtimpulse die richtigen Dämpfungswerte gefunden, so kann die oben erwähnte Serie von Meßlicht- und Referenzlicht-Laufzeitmessungen und Eichvorgängen ablaufen und es können aus den dabei gewonnenen Einzelmeßwerten Mittelwerte gebildet werden, aus denen dann der gesuchte Entfernungsmeßwert berechnet werden kann.

Von besonderer Wichtigkeit ist dabei, daß der gesamte Empfangskanal und insbesondere auch die Zeitmeßschaltung 25 streng periodisch betrieben werden, damit die Meßgenauigkeit auf die oben angegebenen Werte gebracht werden kann. Ein besonderer Vorteil der eben beschriebenen Ausführungsform des Lichtwegumschalters 10 besteht darin, daß die rotierende Scheibe 55 einen solchen streng periodischen Betrieb des Empfangskanals und der nachgeschalteten Zeitmeßvorrichtung tatsächlich ermöglicht, nachdem einmal die richtige Dämpfung gefunden ist. Die Scheibe 55 besitzt ja, wie man insbesondere der Fig. 4 entnimmt, jeweils drei Gruppen von Sendelichtöffnungen 60 bis 65 und Spiegeln 70 bis 75 und den zugehörigen Empfangslichtöffnungen 90 bis 95. Das bedeutet, daß bei jeder Drehung der Scheibe in exakt gleichen Abständen drei Meßlichtimpulse und dazwischen verschachtelt drei Referenzlichtimpulse abgegeben und die zugehörigen Signallaufzeiten ausgemessen werden können. Zwar ist der Zeitabstand zwischen dem Sendezeitpunkt und dem Empfangszeitpunkt eines Meßlichtimpulses von der Entfernung des Zielgegenstandes abhängig, doch kann dies durch einen entsprechenden zeitlichen Vorhalt der Ansteuerung des Trigger-Generators 3 ohne weiteres kompensiert werden. Zu diesem Zweck ermittelt die zentrale Ablaufsteuerungs-, Rechen- und Auswerteeinheit 30 mit einem noch keine strenge Periodizität zu den weiteren Meßvorgängen aufweisenden ersten Meßversuch die ungefähre Entfernung des Zielgegenstandes, die wegen der Aperiodizität der Meßabläufe noch mit einem im Vergleich zur angestrebten Genauigkeit von ± 1 mm beträchtlichen Fehler behaftet sein kann. Dennoch ist diese Entfernungsbestimmung genügend genau, um dann den für eine strenge Periodizität der weiteren Meß- und Referenzschüsse erforderlichen zeitlichen Vorhalt berechnen zu können. Da, wie bereits erwähnt, für kurze und mittlere Entfernungen die Laufzeit der Meßlichtimpuls im Vergleich zur Rotationsgeschwindigkeit der Scheibe 55 keine Rolle spielt, wird durch den eben erwähnten zeitlichen Vorhalt die Bedingung der Volldeckung der Sende- und Empfangslicht-Öffnungen mit dem Sende-Meßlichtweg bzw. dem Empfangs-Meßlichtweg nicht gestört. Für große und sehr große Entfernungen kann wegen der länglichen Ausbildung der Sendelichtöffnungen 60 und 61 der erforderliche zeitliche Vorhalt ebenfalls unter Einhaltung der obigen Bedingung durchgeführt werden.

Zu der den steuerbaren optischen Dämpfer 33 bildenden Graukeilscheibe 80 bzw. einem entsprechenden PLZT- oder PLMNZT-Scheibchen sei noch angemerkt, daß es vorteilhaft ist, ihren Dämpfungsbereich mit beispielsweise 1 : 72 bzw. 1 : 360 doppelt so groß wie den durch den Empfänger 23 gegebenenfalls gemeinsam mit dem Sender 1 vorgegebenen Dynamikbereich von 1 : 36 bzw. 1 : 180 zu wählen. Dadurch läßt sich vor beugend der Tatsache Rechnung tragen, daß die Leistung der Sendediode im allgemeinen im Lauf der Zeit auf die Hälfte abnimmt. Außer einer entsprechenden Verkürzung der maximal meßbaren Entfernung hat dies weiter keine nachteiligen Folgen, wenn man durch die obige Maßnahme im Referenzlichtweg 11 für einen entsprechenden Ausgleich sorgt.

**Patentansprüche**

1. Entfernungsmeßgerät nach dem Prinzip der Laufzeitmessung von Lichtimpulsen mit

einem elektrooptischen Sender (1), der in Antwort auf Triggersignale eines Triggergenerators (3) Lichtimpulse erzeugt,

einem geräteinternen Sendelichtweg (7), der die vom Sender (1) erzeugten Lichtimpulse zu einer geräteinternen Lichtweg-Verzweigungsstelle (10) leitet,

einem Meßlichtweg (15, 19, 21), der von der Lichtweg-Verzweigungsstelle (10) über eine Sendeoptik (16) zum Zielgegenstand und von dort zurück über eine Empfangsoptik (18) zu einer geräteinternen Lichtweg-Verbindungsstelle (35) führt,

einem Referenzlichtweg (11), der von der Lichtweg-Verzweigungsstelle (10) geräteintern zur Lichtweg-Verbindungsstelle (35) führt und für die ihn durchlaufenden Lichtimpulse eine konstante Laufzeit vorgibt und der eine optische Dämpfungseinrichtung (33) mit steuerbarem Dämpfungsfaktor umfaßt, um die Intensität der Referenzlichtimpulse an die Intensität der empfangenen Meßlichtimpulse anzupassen, und

einem hinter der Lichtweg-Verbindungsstelle (35) angeordneten optoelektrischen Empfänger (23), der beim Empfang der Lichtimpulse elektrische Start- bzw. Stopsignale für die Laufzeitmessungen erzeugt,

dadurch gekennzeichnet,

daß an der Lichtweg-Verzweigungsstelle (10) ein Lichtweg-Umschalter angeordnet ist, der von einer Spiegelfläche (45) gebildet wird, die um eine Achse drehbar angeordnet ist, die auf den optischen Verbindungsachsen zwischen Sendelichtweg (7) und Meßlichtweg und zwischen Sendelichtweg (7) und Referenzlichtweg (11) senkrecht steht,

daß die aus dem Sendelichtweg (7) austretenden Lichtimpulse so auf die Spiegelfläche (45) auftreffen, daß ein von der momentanen Winkelstellung der Spiegelfläche (45) abhängender Teil der im jeweiligen Lichtimpuls enthaltenen Lichtmenge in den Meßlichtweg oder den Referenzlichtweg (11) eingespeist wird,

daß eine Einrichtung zur Erzeugung einer Drehbewegung der Spiegelfläche (45), bei der die Spiegelfläche (45) jeweils eine Vielzahl von Winkelstellungen durchläuft, vorgesehen ist und

daß eine Steuervorrichtung (30) aufgrund eines das Durchlaufen der verschiedenen Winkelstellungen kennzeichnenden Signals den Triggergenerator (3) so zeitlich zur Abgabe eines Triggerimpulses steuert, daß der daraufhin vom Sender (1) erzeugte Lichtimpuls auf die Spiegelfläche (45) in der Winkelstellung auftrifft, in der sie einen gewünschten Teil der in dem Lichtimpuls enthaltenen Lichtmenge in den Meßlichtweg oder den Referenzlichtweg (11) einspeist.

2. Entfernungsmeßgerät nach dem Prinzip der Laufzeitmessung von Lichtimpulsen mit

einem elektrooptischen Sender (1), der in Antwort auf Triggersignale eines Triggergenerators (3) Lichtimpulse erzeugt,

einem geräteinternen Sendelichtweg (7), der die vom Sender (1) erzeugten Lichtimpulse zu einer geräteinternen Lichtweg-Verzweigungsstelle (10) leitet,

einem Meßlichtweg (15, 19, 21), der von der Lichtweg-Verzweigungsstelle (10) über eine Sendeoptik (16) zum Zielgegenstand und von dort zurück über eine Empfangsoptik (18) zu einer geräteinternen Lichtweg-Verbindungsstelle (35) führt,

einem Referenzlichtweg (11), der von der Lichtweg-Verzweigungsstelle (10) geräteintern zur Lichtweg-Verbindungsstelle (35) führt und für die ihn durchlaufenden Lichtimpulse eine konstante Laufzeit vorgibt und der eine optische Dämpfungseinrichtung (33) mit steuerbarem Dämpfungsfaktor umfaßt, um die Intensität der Referenzlichtimpulse an die Intensität der empfangenen Meßlichtimpulse anzupassen, und

einem hinter der Lichtweg-Verbindungsstelle (35) angeordneten optoelektrischen Empfänger (23), der beim Empfang der Lichtimpulse elektrische Start- bzw. Stopsignale für die Laufzeitmessungen erzeugt,

dadurch gekennzeichnet,

daß an der Lichtweg-Verzweigungsstelle ein Lichtweg-Umschalter angeordnet ist, der von einer Spiegelfläche gebildet wird, die um eine Achse drehbar angeordnet ist, die auf den optischen Verbindungsachsen zwischen Sendelichtweg und Meßlichtweg und zwischen Sendelichtweg und Referenzlichtweg senkrecht steht,

daß der an die Lichtweg-Verzweigungsstelle anschließende Teil des Meß- und/oder des Referenzlichtweges aus mehreren optisch zueinander parallelen Abschnitten besteht, die Dämpfungselemente mit zumindest teilweise voneinander verschiedenen Dämpfungsfaktoren enthalten,

daß die aus dem Sendelichtweg austretenden Lichtimpulse auf die Spiegelfläche auftreffen und in Abhängigkeit von der momentanen Winkelstellung der Spiegelfläche in einen der optisch parallelen Abschnitte des Meßlichtweges und/oder des Referenzlichtweges eingespeist werden,

daß eine Einrichtung zur Erzeugung einer Drehbewegung der Spiegelfläche, bei der die Spiegelfläche jeweils eine Vielzahl von Winkelstellungen durchläuft, vorgesehen ist und

daß eine Steuervorrichtung aufgrund eines das Durchlaufen der verschiedenen Winkelstellungen kennzeichnenden Signals den Triggergenerator zeitlich so zur Abgabe eines Triggerimpulses steuert, daß der daraufhin vom Sender erzeugte Lichtimpuls auf die Spiegelfläche in der Winkelstellung auftrifft, in der sie ihn in denjenigen der optisch parallelen Abschnitte einspeist, der das Dämpfungselement mit dem gewünschten Dämpfungsfaktor enthält.

3. Entfernungsmeßgerät nach Anspruch 1 oder 2, dadurch gekennzeichnet, daß die Spiegelfläche (45) von einem periodisch hin- und herschwingenden Spiegel gebildet wird und daß die beiden Winkelstellungen dieses Spiegels (45), in denen die gesamte Lichtmenge, die in einem aus dem Sendelichtweg (7) austretenden Lichtimpuls enthalten ist, in den Meßlichtweg bzw. den Referenzlichtweg (11) eingespeist wird, nicht mit den Umkehrpunkten der Schwingbewegung des Spiegels (45) zusammenfallen.

4. Entfernungsmeßgerät nach Anspruch 1 oder 2, dadurch gekennzeichnet, daß die Spiegelfläche (45) jeweils von einer Seitenfläche eines rotierenden Prismas gebildet wird, dessen Rotationsachse auf den optischen Verbindungsachsen zwischen Sendelichtweg (7) und Meßlichtweg und zwischen Sendelichtweg (7) und Referenzlichtweg (11) senkrecht steht.

5. Entfernungsmeßgerät nach dem Prinzip der Laufzeitmessung von Lichtimpulsen mit

einem elektrooptischen Sender (1), der in Antwort auf Triggersignale eines Triggergenerators (3) Lichtimpulse erzeugt,

einem geräteinternen Sendelichtweg (7), der die vom Sender (1) erzeugten Lichtimpulse zu einer geräteinternen Lichtweg-Verzweigungsstelle (10) leitet,

einem Meßlichtweg (15, 19, 21), der von der Lichtweg-Verzweigungsstelle (10) über eine Sendeoptik (16) zum Zielgegenstand und von dort zurück über eine Empfangsoptik (18) zu einer geräteinternen Lichtweg-Verbindungsstelle (35) führt,

einem Referenzlichtweg (11), der von der Lichtweg-Verzweigungsstelle (10) geräteintern zur Lichtweg-Verbindungsstelle (35) führt und für die ihn durchlaufenden Lichtimpulse eine konstante Laufzeit vorgibt und der eine optische Dämpfungseinrichtung (33) mit steuerbarem Dämpfungsfaktor umfaßt, um die Intensität der Referenzlichtimpulse an die Intensität der empfangenen Meßlichtimpulse anzupassen, und

einem hinter der Lichtweg-Verbindungsstelle (35) angeordneten optoelektrischen Empfänger (23), der beim Empfang der Lichtimpulse elektrische Start- bzw. Stopsignale für die Laufzeitmessungen erzeugt,

dadurch gekennzeichnet,

daß an der Lichtweg-Verzweigungsstelle (10) ein Lichtweg-Umschalter vorgesehen ist, der von einer Scheibe (55) gebildet wird, die um eine Rotationsachse (56) drehbar angeordnet ist, welche sich parallel zur optischen Achse des Sendelichtwegs (7) erstreckt, wobei die Scheibe (55) mit einem ersten Umfangsbereich ihrer Flachseite in die optischen Verbindungswege zwischen Sendelichtweg (7) und Meßlichtweg (15, 19, 21) sowie zwischen Sendelichtweg (7) und Referenzlichtweg (11) hineinragt und in diesem Bereich Einrichtungen zum wechselweisen Einspeisen der aus dem Sendelichtweg (7) austretenden Lichtimpulse in den Meßlichtweg und in den Referenzlichtweg (11) aufweist,

daß die Scheibe (55) in einem zweiten Umfangsbereich ihrer Flachseite eine Vielzahl von Öffnungen (90 bis 95) aufweist, die alle denselben Abstand von der Rotationsachse (56) der Scheibe (55) aufweisen und von denen zumindest einige (91 bis 95) zur Dämpfung der Lichtimpulse Filter enthalten, von denen sich zumindest einige hinsichtlich ihrer Dämpfungsfaktoren voneinander unterscheiden, und die bei Drehung der Scheibe der Reihe nach durch den Lichtweg geführt werden, in dem die Lichtimpulse gedämpft werden sollen,

daß eine Antriebseinrichtung vorgesehen ist, mit der die Scheibe (55) in kontinuierliche Rotation versetzt wird, und

daß eine Steuervorrichtung (30) aufgrund eines die Rotation der Scheibe (55) kennzeichnenden Signals den Triggergenerator (3) zeitlich so zur Abgabe eines Triggerimpulses steuert, daß der daraufhin vom Sender erzeugte Lichtimpuls genau dann den zweiten Umfangsbereich der Scheibe durchläuft, wenn ihm dort diejenige Öffnung (90 bis 95) präsentiert wird, die die gewünschte Dämpfung des Lichtimpulses bewirkt.

6. Entfernungsmeßgerät nach Anspruch 5, dadurch gekennzeichnet, daß die Scheibe (45) zu einer gleichförmigen Rotation angetrieben wird.

7. Entfernungsmeßgerät nach Anspruch 5 oder 6, dadurch gekennzeichnet, daß die Einrichtungen der Scheibe (55) zum Einspeisen der aus dem Sendelichtweg (7) austretenden Lichtimpulse in den Meßlichtweg oder in den Referenzlichtweg (11) wenigstens eine die aus dem Sendelichtweg (7) austretenden Lichtimpulse geradlinig durchlassende Öffnung (60 bis 65) und wenigstens einen die aus dem Sendelichtweg (7) austretenden Lichtimpulse um einen vorgegebenen Winkel ablenkenden Spiegel (70 bis 73) aufweist, die durch die Rotation der Scheibe (55) abwechselnd in den Weg der aus dem Sendelichtweg (7) austretenden Lichtimpulse gebracht werden.

8. Entfernungsmeßgerät nach Anspruch 7, dadurch gekennzeichnet, daß der Meßlichtweg zum Empfang der geradlinig durch die wenigstens eine Öffnung (60 bis 65) der Scheibe (55) durchgelassenen und der Referenzlichtweg (11) zum Empfang der durch den wenigstens einen Spiegel (70 bis 73) abgelenkten Lichtimpulse angeordnet sind.

9. Entfernungsmeßgerät nach Anspruch 7 oder 8, dadurch gekennzeichnet, daß die Scheibe (55) mehrere die aus dem Sendelichtweg (7) austretenden Lichtimpulse geradlinig durchlassende Öffnungen (60 bis 65) und mehrere die aus dem Sendelichtweg (7) austretenden Lichtimpulse ablenkende Spiegel (70 bis 75) aufweist, daß alle Öffnungen (60 bis 65) und Spiegel (70 bis 75) denselben Abstand von der Rotationsachse (56) der Scheibe (55) besitzen und daß in wenigstens einer (62 bis 65) der Öffnungen (60 bis 65) ein Filter angeordnet ist, das die Intensität der aus dem Sendelichtweg (7) austretenden Lichtimpulse dämpft.

10. Entfernungsmeßgerät nach einem der Ansprüche 5 bis 9, dadurch gekennzeichnet, daß der zweite Umfangsbereich der Scheibe (55) in den von der Empfangsoptik (18) zur Lichtweg-Verbindungsstelle (35) führenden Teil des Meßlichtweges hineinragt.

11. Entfernungsmeßgerät nach Anspruch 10, dadurch gekennzeichnet, daß jeweils n der Öffnungen (90 bis 95) im zweiten Umfangsbereich der Scheibe (55) zu einer Gruppe zusammengefaßt sind, die eine die Lichtimpulse ungedämpft durchlassende Öffnung (90) sowie n — 1 Öffnungen (91 bis 95) aufweist, in denen jeweils ein Filter mit einem anderen Dämpfungsfaktor angeordnet ist, und daß in jeder Gruppe die dämpfungsfreie Öffnung (90) und die Öffnungen (91 bis 95) mit den Filtern mit unterschiedlichen Dämpfungsfaktoren in der gleichen Reihenfolge angeordnet sind.

12. Entfernungsmeßgerät nach Anspruch 11, dadurch gekennzeichnet, daß die Dämpfungsfaktoren der in einander entsprechenden Öffnungen (90 bis 95) verschiedener Gruppen angeordneten Filter einander gleich sind und daß sich die Dämpfungsfaktoren der zu einer Gruppe gehörenden Filter jeweils voneinander um einen Faktor unterscheiden, der kleiner als das Verhältnis der größten zur kleinsten vom optoelektrischen Empfänger (23) und dem ihm nachgeschalteten Kanal verarbeitbaren Signalamplitude ist.

13. Entfernungsmeßgerät nach Anspruch 11, dadurch gekennzeichnet, daß die Dämpfungsfaktoren der in einander entsprechenden Öffnungen (90 bis 95) verschiedener Gruppen angeordneten Filter einander gleich sind und daß sich die Dämpfungsfaktoren der zu einer Gruppe gehörenden Filter jeweils voneinander um einen Faktor unterscheiden, der kleiner als das Produkt aus dem Verhältnis der größten zur kleinsten vom optoelektrischen Empfänger (23) und dem ihm nachgeschalteten Kanal verarbeitbaren Signalamplitude und aus dem Verhältnis der größten zur kleinsten vom Sender (1) abgebbaren Leigtung ist.

14. Entfernungsmeßgerät nach einem der Ansprüche 10 bis 13, dadurch gekennzeichnet, daß die Öffnungen (60 bis 65) im ersten Umfangsbereich der Scheibe (55) zu jeweils n Öffnungen umfassenden Gruppen zusammengefaßt sind, zwischen denen sich jeweils n Spiegel (70 bis 75) umfassende Gruppen von Spiegeln befinden, daß jede der Gruppen von Öffnungen (60 bis 65) wenigstens eine in Umfangsrichtung verlängerte Öffnung (60, 61) umfaßt, in der kein Filter angeordnet ist, und daß in den übrigen Öffnungen (62 bis 65) unter einem von 90° verschiedenen Winkel schräg zur optischen Achse (15a) stehende Dämpfungsfilter angeordnet sind, die alle denselben Dämpfungsfaktor aufweisen.

15. Entfernungsmeßgerät nach einem der Ansprüche 10 bis 14, dadurch gekennzeichnet, daß immer eine Öffnung (60 bis 65) bzw. ein Spiegel (70 bis 75) im ersten Bereich der Scheibe (55) und eine Öffnung (90 bis 95) im zweiten Bereich der Scheibe (55) mit ihren Mittelpunkten auf einem gemeinsamen von der Rotationsachse (56) der Scheibe (55) ausgehenden Radialstrahl angeordnet sind, und daß die Scheibe (55) wenigstens ein Loch (98) aufweist, das einen anderen Abstand von der Rotationsachse (56) besitzt, als die Öffnungen (60 bis 65 und 90 bis 95) und die Spiegel (70 bis 75) und durch das bei jeder Umdrehung der Scheibe (55) einmal eine Lichtschranke (90, 100) freigegeben wird, deren Signal zur Feststellung der momentanen Lage der Scheibe (55) und zur Überwachung ihrer Rotationsgeschwindigkeit dient.

16. Entfernungsmeßgerät nach Anspruch 15, dadurch gekennzeichnet, daß in einem vorgegebenen Winkelabstand vor jedem der die Mitte zweier Öffnungen bzw. einer Öffnung und eines Spiegels miteinander verbindenden Radialstrahlen ein die Lichtschranke freigebendes Loch (98) vorgesehen ist und daß die beim Durchlaufen dieser Löcher (98) durch die Lichtschranke (99, 100) abgegebenen Signale zur Vorbereitung der Triggerung eines Lichtimpulses dienen.

17. Entfernungsmeßgerät nach einem der Ansprüche 10 bis 16, dadurch gekennzeichnet, daß die Lichtweg-Verbindungsstelle (35) zwischen der rotierenden Scheibe (55) und dem optoelektrischen Empfänger (23) von einem schräg zur optischen Achse des Empfangslichtweges angeordneten, teildurchlässigen Spiegel (85) gebildet wird, durch den die vom Zielgegenstand reflektierten Meßlichtimpulse geradlinig hindurchtreten und durch den die aus dem Referenzlichtweg (11) kommenden Referenzlichtimpulse umgelenkt und in den zum optoelektrischen Empfänger (23) führenden Teil (21) des Empfangslichtweges (19, 21) eingekoppelt werden.

18. Entfernungsmeßgerät nach einem der vorhergehenden Ansprüche, dadurch gekennzeichnet, daß im Referenzlichtweg (11) seriell hintereinander ein Dämpfungsglied (83) mit einem festen Dämpfungsfaktor und ein steuerbares Dämpfungsglied (33) mit einem veränderlichen Dämpfungsfaktor angeordnet sind.

19. Entfernungsmeßgerät nach Anspruch 18, dadurch gekennzeichnet, daß das Verhältnis von maximalem zu minimalem Dämpfungsfaktor des steuerbaren Dämpfungsgliedes (33) wenigstens gleich dem Produkt aus einem das alterungsbedingte Nachlassen der Senderleistung berücksichtigenden Zahlenwert und dem Verhältnis der maximalen zur minimalen Signalamplitude ist, die vom optoelektrischen Empfänger (23) und seinem nachgeschalteten Kanal noch verarbeitet werden können.

20. Entfernungsmeßgerät nach Anspruch 18, dadurch gekennzeichnet, daß das Verhältnis von maximalem zu minimalem Dämpfungsfaktor des steuerbaren Dämpfungsgliedes (33) wenigstens gleich dem Produkt aus einem das alterungsbedingte Nachlassen der Senderleistung berücksichtigenden Zahlenwert, dem Verhältnis der maximalen zur minimalen Signalamplitude, die vom optoelektrischen Empfänger (23) und seinem nachgeschalteten Kanal noch verarbeitet werden können, und dem Verhältnis der maximalen zur minimalen Leistung ist, die vom Sender (1) abgegeben werden kann.

21. Entfernungsmeßgerät nach einem der Ansprüche 18 bis 20, dadurch gekennzeichnet, daß das steuerbare Dämpfungsglied (33) eine durch einen Schrittmotor (81) verdrehbare Graukeilscheibe (80) ist.

22. Entfernungsmeßgerät nach einem der Ansprüche 18 bis 20, dadurch gekennzeichnet, daß das steuerbare Dämpfungsglied (33) ein PLZT- oder PLMNZT-Scheibchen ist.

23. Entfernungsmeßgerät nach einem der Ansprüche 18 bis 22, dadurch gekennzeichnet, daß das Steuersignal für das steuerbare Dämpfungsglied (33) durch Vergleich der verstärkten und gleichgerichteten Signalamplituden gewonnen wird, die der optoelektrische Empfänger (23) beim Empfang eines Meßlichtimpulses einerseits und beim Empfang eines Referenzlichtimpulses andererseits abgibt.

24. Entfernungsmeßgerät nach einem der vorhergehenden Ansprüche mit einem zur Erzeugung der verschiedenen benötigten Spannungen dienenden Zerhacker, dadurch gekennzeichnet, daß der Triggergenerator (3) in Abhängigkeit von den Zerhackerschwingungen so gesteuert wird, daß Beginn und Ende der Signallaufzeitmessungen in Zeiträume fallen, in denen keine durch die Zerhackerflanken bedingten Störungen auftreten.

25. Entfernungsmeßgerät nach einem der Ansprüche 1 bis 24 mit einem zur Erzeugung der verschiedenen benötigten Spannungen dienenden Zerhacker, dadurch gekennzeichnet, daß eine Schaltungsanordnung zum Unterdrücken der Schwingungen des Zerhackers in den Zeiträumen, in die Beginn und Ende einer Signal-Laufzeitmessung fallen können, und ein in diesen Zeiträumen die Stromversorgung des Gerätes übernehmender Pufferkondensator vorgesehen sind.

26. Entfernungsmeßgerät nach einem der vorhergehenden Ansprüche, dadurch gekennzeichnet, daß zur Optimierung des Signal/Rausch-Verhältnisses ein in der Mittenfrequenz abstimmbares Interferenzfilter (87) in einem Lichtweg vor dem optoelektrischen Empfänger (23) angeordnet ist.

**Claims**

1. A distance measuring apparatus operating according to the principle of measuring the time of travel of light pulses, comprising

an electro-optical transmitter (1) which, in response to trigger signals of a trigger generator (3), generates light pulses,

a transmitter light path (7) inside the apparatus, forwarding the light pulses generated by the transmitter (1) to a light path branching point (10) inside the apparatus,

a measuring light path (15, 19, 21) leading from the light path branching point (10) via an optical transmitting means (16) to the target and therefrom back via an optical receiving means (18) to a light path connection point (35) inside the apparatus,

a reference light path (11) leading inside the apparatus from the light path branching point (10) to the light path connection point (35) and establishing a constant time of travel for the light pulses passing through it, said reference light path comprising an optical damping means (33) having a controllable damping factor for adapting the intensity of the reference light pulses to the intensity of the received measuring light pulses, and

an optoelectric receiver (23) which is arranged behind the light path connection point (35) and which, upon receipt of the light pulses, generates electrical start and stop signals for the measurement of the time of travel, characterized

in that at the light path branching point (10) is arranged a light path change over switch which is constituted by a mirror surface (45) which is arranged to be rotatable about an axis which is perpendicular to the optical connection axes between the transmitter light path (7) and the measuring light path and between the transmitter light path (7) and the reference light path (11)

in that the light pulses which emerge from the transmitter light path (7) impinge on the mirror surface (45) in such a way that a part of the quantity of light, which is contained in the respective light pulse, is fed into the measuring light path or into the reference light path (11), said part being dependent on the instantaneous angular position of the mirror surface (45),

in that a means for generating a rotational movement of the mirror surface (45) is provided, during which rotational movement the mirror surface (45) in each case passes through a plurality of angular positions, and

in that a control means (30), on the basis of a signal characterizing the passing through of the different angular positions, controls the trigger generator (3) with respect to time to generate a trigger pulse in such a manner that the light pulse, which thereupon is generated by the transmitter (1), impinges on the mirror surface (45) in an angular position in which the mirror surface feeds a desired part of the quantity of light being contained in the light pulse into the measuring light path or into the reference light path (11).

2. A distance measuring apparatus operating according to the principle of measuring the time of travel of light pulses, comprising

an electro-optical transmitter (1) which, in response to trigger signals of a trigger generator (3) generates light pulses,

a transmitter light path (7) inside the apparatus, forwarding the light pulses generated by the transmitter (1) to a light path branching point (10) inside the apparatus,

a measuring light path (15, 19, 21) leading from the light path branching point (10) via an optical transmitting means (16) to the target and therefrom back via an optical receiving means (18) to a light path connection point (35) inside the apparatus,

a reference light path (11) leading inside the apparatus from the light path branching point (10) to the light path connection point (35) and establishing a constant time of travel for the light pulses passing through it, said reference light path comprising an optical damping means (33) having a controllable damping factor for adapting the intensity of the reference light pulses to the intensity of the received measuring light pulses, and

an optoelectric receiver (23) which is arranged behind the light path connection point (35) and which, upon receipt of the light pulses, generates electrical start and stop signals for the measurement of the time of travel, characterized

in that at the light path branching point is arranged a light path change over switch which is constituted by a mirror surface which is arranged to be rotatable about an axis which is perpendicular to the optical connection axes between the transmitter light path and the measuring light path and between the transmitter light path and the reference light path,

in that the parts of the measuring light path and/or the reference light path, which are adjacent to the light path branching point, respectively comprise several sections being optically parallel to each other and comprising damping members at least some of which have different damping factors,

in that the light pulses which emerge from the transmitter light path impinge on the mirror surface and are fed, in dependency on the instantaneous angular position of the mirror surface, into one of the optically parallel sections of the measuring light path and/or the reference light path,

in that a means for generating a rotational movement of the mirror surface is provided, during which rotational movement the mirror surface in each case passes through a plurality of angular positions, and

in that a control means, on the basis of a signal characterizing the passing through of the different angular positions, controls the trigger generator with respect to time to generate a trigger pulse in such a manner that the light pulse, which thereupon is generated by the transmitter impinges on the mirror surface in such an angular position that said mirror surface feeds said light pulse into that one of the optically parallel sections, which comprises the damping member having the desired damping factor.

3. A distance measuring apparatus according to claim 1 or 2, characterized in that the mirror surface (45) is constituted by a mirror oscillating periodically to and fro, and in that the two angular positions of this mirror (45) in which the whole quantity of light, which is contained in a light pulse emerging from the transmitter light path (7), is fed into the measuring light path or into the reference light path (11), respectively, do not coincide with the reversal points of the oscillation movement of the mirror (45).

4. A distance measuring apparatus according to claim 1 or 2, characterized in that the mirror surface (45) is constituted in each case by a side surface of a rotating prism, the rotational axis of which is perpendicular to the optical connection axes between the transmitter light path (7) and the measuring light path and between the transmitter light path (7) and the reference light path (11).

5. A distance measuring apparatus operating according to the principle of measuring the time of travel of light pulses, comprising

an electro-optical transmitter (1) which, in response to trigger signals of a trigger generator (3), generates light pulses,

a transmitter light path (7) inside the apparatus, forwarding the light pulses generated by the transmitter (1) to a light path branching point (10) inside the apparatus,

a measuring light path (15, 19, 21) leading from the light path branching point (10) via an optical transmitting means (16) to the target and therefrom back via an optical receiving means (18) to a light path connection point (35) inside the apparatus,

a reference light path (11) leading inside the apparatus from the light path branching point (10) to the light path connection point (35) and establishing a constant time of travel for the light pulses passing through it, said reference light path comprising an optical damping means (33) having a controllable damping rate for adapting the intensity of the reference light pulses to the intensity of the received measuring light pulses, and

an optoelectric receiver (23) which is arranged behind the light path connection point (35) and which, upon receipt of the light pulses, generates electrical start and stop signals for the measurement of the time of travel, characterized

in that at the light path branching point (10) a light path change over switch is provided which is constituted by a disc (55) being rotatable about an axis of rotation (56) extending in parallel to the optical axis of the transmitter light path (7), said disc (55) extending with a first circumferential zone of its flat side into the optical connection paths between the transmitter light path (7) and the measuring light path (15, 19, 21) as well as between the transmitter light path (7) and the reference light path (11), and comprising in this zone means for alternately feeding light pulses emerging from the transmitter light path (7) into the measuring light path and into the reference light path (11),

in that the disc (55) comprises a plurality of openings (90 to 95) in a second circumferential zone of its flat side, all said openings having the same distance from the axis of rotation (56) of the disc (55) and, for damping the light pulses, at least some of said openings (91 to 95) comprising filters at least some of which differ from each other with respect to their damping factors, said filters being passed one by one by a rotation of the disc through the light path in which the light pulses are to be damped,

in that a driving means is provided by which the disc (55) is driven for a continuous rotation, and

in that a control means (30), in response to a signal characterizing the rotation of the disc (55), controls the trigger generator (3) in time for generating a trigger pulse in such a manner that the light pulse, which is thereupon generated by the transmitter, passes through the second circumferential zone of the disc exactly at an instant at which there that opening (90 to 95) is presented to it which causes the desired damping of the light pulse.

6. A distance measuring apparatus according to claim 5, characterized in that the disc (55) is driven for a uniform rotation.

7. A distance measuring apparatus according to claim 5 or 6, characterized in that the means of the disc (55) for feeding the light pulses emerging from the transmitter light path (7) either into the measuring light path or into the reference light path (11) comprise at least one opening (60 to 65) rectilinearly letting through the light pulses emerging from the transmitter light path (7), and at least one mirror (70 to 73) deflecting through a predetermined angle the light pulses emerging from the transmitter light path (7), said at least one opening and said at least one mirror being alternately moved by the rotation of the disc (55) into the path of the light pulses emerging from the transmitter light path (7).

8. A distance measuring apparatus according to claim 7, characterized in that the measuring light path is arranged to receive the light pulses which are rectilinearly let through by the at least one opening (60 to 65) of the disc (55) and in that the reference light path (11) is arranged to receive the light pulses which are deflected by the at least one mirror (70 to 73).

9. A distance measuring apparatus according to claim 7 or 8, characterized in that the disc (55) comprises several openings (60 to 65) rectilinearly letting through the light pulses emerging from the transmitter light path (7), and several mirrors (70 to 75) deflecting the light pulses emerging from the transmitter light path (7), in that all said openings (60 to 65) and said mirrors (70 to 75) have the same distance from the axis of rotation (56) of the disc (55) and in that a filter damping the intensity of the light pulses emerging from the transmitter light path (7) is arranged in at least one of said openings (60 to 65).

10. A distance measuring apparatus according to any of claims 5 to 9, characterized in that the second circumferential zone of the disc (55) extends into the section of the measuring light path which leads from the optical receiving means (18) to the light path connection point (35).

11. A distance measuring apparatus according to claim 10, characterized in that in each case n of the openings (90 to 95) in the second circumferential zone of the disc (55) are combined into a group which comprises one opening (90) letting through the light pulses undamped, and n — 1 openings (91 to 95) in each of which a filter, having a different damping factor, is arranged, and in that in each group the damping-free opening (90) and the openings (91 to 95) with the filters of different damping factors are arranged in the same sequence.

12. A distance measuring apparatus according to claim 11, characterized in that the damping factors of filters, which are arranged in mutually corresponding openings (90 to 95) of different groups are equal to each other, and in that the damping factors of the filters belonging to one group differ from each other in each case by a factor which is smaller than the ratio of the greatest to the smallest signal amplitude processable by the opto-electric receiver (23) and the channel connected behind it.

13. A distance measuring apparatus according to claim 11, characterized in that the damping factors of filters which are arranged in mutually corresponding openings (90 to 95) of different groups are equal to each other, and in that the damping factors of the filters belonging to one group differ from each other in each case by a factor which is smaller than the product of the ratio of the greatest to the smallest signal amplitude, processable by the opto-electric receiver (23) and the channel connected behind it, and of the ratio of the greatest to the smallest power deliverable by the transmitter (1).

14. A distance measuring apparatus according to any of claims 10 to 13, characterized in that the openings (60 to 65) in the first circumferential zone of the disc (55) are combined into groups each of which comprises n openings, between these groups being arranged groups of mirrors each of which comprises n mirrors (70 to 75), in that each of the groups of openings (60 to 65) comprises at least one opening (60, 61) which is elongated in circumferential direction and in which no filter is arranged, and in that in the remaining openings (62 to 65) damping filters are arranged which all have the same damping factor and stand inclined to the optical axis (15a) at an angle which is different from 90°.

15. A distance measuring apparatus according to any of claims 10 to 14, characterized in that each time one opening (60 to 65) or one mirror (70 to 75) in the first zone of the disc (55) and one opening (90 to 95) in the second zone of the disc (55) are arranged with their centres on a common radial straight line emanating from the axis of rotation (56) of the disc (55), and in that the disc (55) has at least one hole (98), which has a different distance from the axis of rotation (56) than the openings (60 to 65 and 90 to 95) and the mirrors (70 to 75) and through which once on each rotation of the disc (55) a light barrier (90, 100) is unblocked, the signal of which serves for the determination of the instantaneous position of the disc (55) and for the monitoring of its rotational speed.

16. A distance measuring apparatus according to claim 15, characterized in that a hole (98) unblocking the light barrier is provided at a predetermined angular distance in front of each of the radial straight lines interconnecting the centres of two openings or of one opening and one mirror and in that the signals, which are delivered by the light barrier (99, 100) during the passage of these holes (98) serve for the preparation of the triggering of a light pulse.

17. A distance measuring apparatus according to any of claims 10 to 16, characterized in that the light path connecting point (35) between the rotating disc (55) and the opto-electric receiver (23) is a partially permeable mirror (85) which is arranged obliquely to the optical axis of the receiving light path and through which the measuring light pulses reflected from the target pass rectilinearly and by which the reference light pulses coming from the reference light path (11) are deflected and fed into the part (21) of the receiving light path (19, 21) leading to the opto-electric receiver (23).

18. A distance measuring apparatus according to one of the preceding claims, characterized in that a damping member (83) having a fixed damping factor and a controllable damping member (33) having a variable damping factor are arranged serially one behind the other in the reference light path (11).

19. A distance measuring apparatus according to claim 18, characterized in that the ratio of maximum to minimum damping factor of the controllable damping member (33) is at least equal to the product of a numerical value taking into account the lessening in transmitter power due to aging and the ratio of the maximum to the minimum signal amplitude which can still be processed by the opto-electric receiver (23) and the channel connected behind it.

20. A distance measuring apparatus according to claim 18, characterised in that the ratio of maximum to minimum damping factor of the controllable damping member (33) is at least equal to the product of a numerical value taking into account the lessening in transmitter power due to aging, the ratio of the maximum to the minimum signal amplitude which can still be processed by the opto-electric receiver (23) and the channel connected behind it, and the ratio of the maximum to the minimum power which can be delivered by the transmitter (1).

21. A distance measuring apparatus according to any of claims 18 to 20, characterized in that the controllable damping member (33) is a grey wedge disc (80) rotatable by a stepping motor (81).

22. A distance measuring apparatus according to any of claims 18 to 20, characterized in that the controllable damping member (33) is a PLZT or a PLMNZT platelet.

23. A distance measuring apparatus according to any of claims 18 to 22, characterized in that the control signal for the controllable damping member (33) is obtained by comparison of the amplified and rectified signal amplitudes which the opto-electric receiver (23) delivers on the one hand on the reception of a measuring light pulse and on the other hand on the reception of a reference light pulse.

24. A distance measuring apparatus according to any of the preceding claims with a vibratory converter serving for the generation of the different required voltages, characterized in that the trigger generator (3) is so controlled in dependence on the oscillations of the vibratory converter that start and end of the signal transit time measurements fall into periods, in which no interferences arise due to pulse edges of the vibratory converter.

25. A distance measuring apparatus according to any of claims 1 to 24 with a vibratory converter serving for the generation of the different required voltages, characterized in that a circuit arrangement for the suppression of the oscillations of the vibratory converter in the periods, into which start and end of a signal transit time measurement can fall, and a buffer capacitor, which takes over the current supply of the apparatus in these periods, are provided.

26. A distance measuring apparatus according to any of the preceding claims, characterized in that an interference filter (87) of tunable centre frequency is arranged in a light path in front of the receiver (23) for optimisation of the signal-to-noise ratio.

## Revendications

1. Télémètre fonctionnant selon le principe du mesurage du temps de transit d'impulsions lumineuses, comprenant

un émetteur électro-optique (1) qui engendre des impulsions lumineuses en réponse à des signaux de déclenchement d'un générateur de déclenchement (3),

un trajet optique d'émission (7), interne à l'appareil et dirigeant les impulsions lumineuses, engendrées par l'émetteur (1), vers une zone (10) de bifurcation du trajet optique, interne à l'appareil,

un trajet optique de mesurage (15, 19, 21) qui, à partir de la zone (10) de bifurcation du trajet optique et par l'intermédiaire d'une optique émettrice (16), gagne la cible à partir de laquelle il retourne, par l'intermédiaire d'une optique réceptrice (18), à une zone (35) de liaison du trajet optique, interne à l'appareil,

un trajet optique de référence (11) qui gagne la zone (35) de liaison du trajet optique à l'intérieur de l'appareil, à partir de la zone (10) de bifurcation du trajet optique, prédétermine un temps de transit constant pour les impulsions lumineuses qui le parcourent, et englobe un dispositif optique d'atténuation (33) à facteur d'atténuation commandable, afin d'adapter l'intensité des impulsions lumineuses de référence à l'intensité des impulsions lumineuses de mesurage reçues, et

un récepteur opto-électrique (23) qui est disposé derrière la zone (35) de liaison du trajet optique et engendre, lors de la réception des impulsions lumineuses, des signaux électriques respectifs de démarrage et d'arrêt pour les mesurages des temps de transit,
caractérisé par le fait

qu'un commutateur de trajets optiques, disposé dans la zone (10) de bifurcation du trajet optique, est formé par une surface réflectrice (45) montée, à rotation, autour d'un axe qui est perpendiculaire aux axes optiques de liaison entre le trajet optique d'émission (7) et le trajet optique de mesurage, et entre le trajet optique d'émission (7) et le trajet optique de référence (11),

que les impulsions lumineuses provenant du trajet optique d'émission (7) viennent rencontrer la surface réflectrice (45) de façon telle qu'une part de la quantité de lumière renfermée par l'impulsion lumineuse considérée, dépendant de la position angulaire instantanée de la surface réflectrice (45), soit envoyée dans le trajet optique de mesurage ou dans le trajet optique de référence (11),

qu'il est prévu un dispositif pour engendrer un mouvement de rotation de la surface réflectrice (45), dans lequel cette surface réflectrice (45) franchit respectivement un grand nombre de positions angulaires, et

que, sur la base d'un signal caractérisant le franchissement des différentes positions angulaires, un dispositif de commande (30) commande dans le temps le générateur de déclenchement (3), en vue de la délivrance d'une impulsion de déclenchement, de façon telle que l'impulsion lumineuse consécutivement engendrée par l'émetteur (1) vienne rencontrer la surface réflectrice (45) dans la position angulaire dans laquelle elle envoie, dans le trajet optique de mesurage ou dans le trajet optique de référence (11), une part souhaitée de la quantité de lumière renfermée par l'impulsion lumineuse.

2. Télémètre fonctionnant selon le principe du mesurage du temps de transit d'impulsions lumineuses, comprenant

un émetteur électro-optique (1) qui engendre des impulsions lumineuses en réponse à des signaux de déclenchement d'un générateur de déclenchement (3),

un trajet optique d'émission (7), interne à l'appareil et dirigeant les impulsions lumineuses, engendrées par l'émetteur (1), vers une zone (10) de bifurcation du trajet optique, interne à l'appareil,

un trajet optique de mesurage (15, 19, 21) qui, à partir de la zone (10) de bifurcation du trajet optique et par l'intermédiaire d'une optique émettrice (16), gagne la cible à partir de laquelle il retourne, par l'intermédiaire d'une optique réceptrice (18), à une zone (35) de liaison du trajet optique, interne à l'appareil,

un trajet optique de référence (11) qui gagne la zone (35) de liaison du trajet optique à l'intérieur de l'appareil, à partir de la zone (10) de bifurcation du trajet optique, prédétermine un temps de transit constant pour les impulsions lumineuses qui le parcourent, et englobe un dispositif optique d'atténuation (33) à facteur d'atténuation commandable, afin d'adapter l'intensité des impulsions lumineuses de référence à l'intensité des impulsions lumineuses de mesurage reçues, et

un récepteur opto-électrique (23) qui est disposé derrière la zone (35) de liaison du trajet optique et engendre, lors de la réception des impulsions lumineuses, des signaux électriques respectifs de démarrage et d'arrêt pour les mesurages des temps de transit,
caractérisé par le fait

qu'un commutateur de trajets optiques, disposé dans la zone de bifurcation du trajet optique, est formé par une surface réflectrice montée, à rotation, autour d'un axe qui est perpendiculaire aux axes optiques de liaison entre le trajet optique d'émission et le trajet optique de mesurage, et entre le trajet optique d'émission et le trajet optique de référence,

que la partie du trajet optique de mesurage et/ou du trajet optique de référence, directement attenante à la zone de bifurcation du trajet optique, se compose de plusieurs tronçons optiquement parallèles les uns aux autres, qui renferment des éléments atténuateurs présentant des facteurs d'atténuation différant au moins partiellement les uns des autres,

que les impulsions lumineuses provenant du trajet optique d'émission viennent rencontrer la surface réflectrice et sont envoyées, en fonction de la position angulaire instantanée de cette surface réflectrice, dans l'un des tronçons optiquement parallèles du trajet optique de mesurage et/ou du trajet optique de référence,

qu'il est prévu un dispositif pour engendrer un mouvement de rotation de la surface réflectrice, dans lequel cette surface réflectrice franchit respectivement un grand nombre de positions angulaires, et

que, sur la base d'un signal caractérisant le franchissement des différentes positions angulaires, un dispositif de commande commande dans le temps le générateur de déclenchement, en vue de la délivrance d'une impulsion de déclenchement, de façon telle que l'impulsion lumineuse consécutivement engendrée par l'émetteur vienne rencontrer la surface réflectrice dans la position angulaire dans laquelle elle l'envoie dans celui des tronçons optiquement parallèles qui renferme l'élément atténuateur présentant le facteur d'atténuation souhaité.

3. Télémètre selon la revendication 1 ou 2, caractérisé par le fait que la surface réflectrice (45) est formée par un miroir périodiquement animé d'un va-et-vient oscillatoire ; et par le fait que les deux positions angulaires de ce miroir (45), dans lesquelles toute la quantité de lumière, renfermée par une impulsion lumineuse provenant du trajet optique d'émission (7), est respectivement envoyée dans le trajet optique de mesurage ou dans le trajet optique de référence (11), ne coïncident pas avec les points d'inversion du mouvement oscillatoire du miroir (45).

4. Télémètre selon la revendication 1 ou 2, caractérisé par le fait que la surface réflectrice (45) est respectivement formée par une face latérale d'un prisme rotatif, dont l'axe de rotation est perpendiculaire aux axes optiques de liaison entre le trajet optique d'émission (7) et le trajet optique de mesurage, et entre le trajet optique d'émission (7) et le trajet optique de référence (11).

5. Télémètre fonctionnant selon le principe du mesurage du temps de transit d'impulsions lumineuses, comprenant

un émetteur électro-optique (1) qui engendre des impulsions lumineuses en réponse à des signaux de déclenchement d'un générateur de déclenchement (3),

un trajet optique d'émission (7), interne à l'appareil et dirigeant les impulsions lumineuses, engendrées par l'émetteur (1), vers une zone (10) de bifurcation du trajet optique, interne à l'appareil,

un trajet optique de mesurage (15, 19, 21) qui, à partir de la zone (10) de bifurcation du trajet optique et par l'intermédiaire d'une optique émettrice (16), gagne la cible à partir de laquelle il retourne, par l'intermédiaire d'une optique réceptrice (18), à une zone (35) de liaison du trajet optique, interne à l'appareil,

un trajet optique de référence (11) qui gagne la zone (35) de liaison du trajet optique à l'intérieur de l'appareil, à partir de la zone (10) de bifurcation du trajet optique, prédétermine un temps de transit constant pour les impulsions lumineuses qui le parcourent, et englobe un dispositif optique d'atténuation (33) à facteur d'atténuation commandable, afin d'adapter l'intensité des impulsions lumineuses de référence à l'intensité des impulsions lumineuses de mesurage reçues, et

un récepteur opto-électrique (23) qui est disposé derrière la zone (35) de liaison du trajet optique et engendre, lors de la réception des impulsions lumineuses, des signaux électriques respectifs de démarrage et d'arrêt pour les mesurages des temps de transit, caractérisé par le fait

qu'un commutateur de trajets optiques, prévu dans la zone (10) de bifurcation du trajet optique, est formé par un disque (55) monté, à rotation, autour d'un axe de rotation (56) qui s'étend parallèlement à l'axe optique du trajet optique d'émission (7), le disque (55) s'engageant, par une première région périphérique de son côté aplati, dans les trajets optiques de liaison entre le trajet optique d'émission (7) et le trajet optique de mesurage (15, 19, 21), ainsi qu'entre le trajet optique d'émission (7) et le trajet optique de référence (11), et présentant, dans cette région, des dispositifs pour envoyer nativement, dans le trajet optique de mesurage et dans le trajet optique de référence (11), les impulsions lumineuses provenant du trajet optique d'émission (7),

que le disque (55) comporte, dans une deuxième région périphérique de son côté aplati, un grand nombre d'orifices (90 à 95) qui sont tous espacés de la même distance par rapport à l'axe de rotation (56) de ce disque (55), et parmi lesquels au moins quelques-uns (91 à 95) renferment, en vue d'atténuer les impulsions lumineuses, des filtres dont au moins quelques-uns diffèrent mutuellement quant à leurs facteurs d'atténuation et sont successivement guidés, lors d'une rotation du disque, à travers le trajet optique dans lequel les impulsions lumineuses doivent être atténuées,

qu'il est prévu un dispositif d'entraînement par lequel le disque (55) est animé d'une rotation continue, et

que, sur la base d'un signal caractérisant la rotation du disque (55), un dispositif de commande (30) commande dans le temps le générateur de déclenchement (3), en vue de la délivrance d'une impulsion de déclenchement, de façon telle que l'impulsion lumineuse consécutivement engendrée par l'émetteur parcourt exactement la deuxième région périphérique du disque lorsque l'orifice (90 à 95), provoquant l'atténuation souhaitée de l'impulsion lumineuse, lui est présenté dans cette zone.

6. Télémètre selon la revendication 5, caractérisé par le fait que le disque (55) est entraîné en une rotation uniforme.

7. Télémètre selon la revendication 5 ou 6, caractérisé par le fait que les dispositifs du disque (55) destinés à envoyer dans le trajet optique de mesurage ou dans le trajet optique de référence (11), les impulsions lumineuses provenant du trajet optique d'émission (7), présentent au moins un orifice (60 à 65) autorisant le passage rectiligne des impulsions lumineuses provenant du trajet optique d'émission (7), et au moins un miroir (70 à 73) qui dévie, selon un angle préétabli, les impulsions lumineuses provenant du trajet optique d'émission (7), qui sont amenés en alternance, par la rotation du disque (55), dans la trajectoire des impulsions lumineuses provenant du trajet optique d'émission (7).

8. Télémètre selon la revendication 7, caractérisé par le fait que le trajet optique de mesurage est disposé en vue de la réception des impulsions lumineuses dont le passage rectiligne est autorisé par au moins un orifice (60 à 65) prévu dans le disque (55), le trajet optique de référence (11) étant disposé en vue de la réception des impulsions lumineuses déviées par au moins un miroir (70 à 73).

9. Télémètre selon la revendication 7 ou 8, caractérisé par le fait que le disque (55) comprend plusieurs orifices (60 à 65) autorisant le passage rectiligne des impulsions lumineuses provenant du trajet optique d'émission (7), et plusieurs miroirs (70 à 75) déviant les impulsions lumineuses provenant du trajet optique d'émission (7) ; par le fait que tous les orifices (60 à 65) et miroirs (70 à 75) sont espacés de la même distance par rapport à l'axe de rotation (56) du disque (55) ; et par le fait qu'au moins l'un (62 à 65) des orifices (60 à 65) loge un filtre qui atténue l'intensité des impulsions lumineuses provenant du trajet optique d'émission (7).

10. Télémètre selon l'une des revendications 5 à 9, caractérisé par le fait que la deuxième région périphérique du disque (55) s'engage dans la partie du trajet optique de mesurage qui mène de l'optique réceptrice (18) à la zone (35) de liaison du trajet optique.

11. Télémètre selon la revendication 10, caractérisé par le fait que n parmi les orifices (90 à 95), ménagés dans la deuxième région périphérique du disque (55), sont respectivement rassemblés en un groupe qui présente un orifice (90) autorisant le passage non atténué des impulsions lumineuses, ainsi que n — 1 orifices (91 à 95) dans lesquels se trouve un filtre présentant, à chaque fois, un autre facteur d'atténuation ; et par le fait que, dans chaque groupe, l'orifice (90) exempt d'atténuation et les orifices (91 à 95) pourvus des filtres à facteurs d'atténuation différents sont agencés selon la même succession.

12. Télémètre selon la revendication 11, caractérisé par le fait que les facteurs d'atténuation des filtres disposés dans des orifices mutuellement correspondants (90 à 95) de différents groupes sont identiques les uns aux autres ; et par le fait que les facteurs d'atténuation des filtres appartenant à un groupe diffèrent les uns des autres, à chaque fois, d'un facteur qui est plus petit que le rapport entre les amplitudes de signaux maximale et minimale pouvant être traitées par le récepteur opto-électrique (23), et par le canal branché en aval de ce récepteur,

13. Télémètre selon la revendication 11, caractérisé par le fait que les facteurs d'atténuation des filtres disposés dans des orifices mutuellement correspondants (90 à 95) de différents groupes sont identiques les uns aux autres ; et par le fait que les facteurs d'atténuation des filtres appartenant à un groupe diffèrent les uns des autres, à chaque fois, d'un facteur qui est plus petit que le produit du rapport entre les amplitudes de signaux maximale et minimale pouvant être traitées par le récepteur opto-électrique (23) et par le canal branché en aval de ce récepteur, et du rapport entre les puissances maximale et minimale pouvant être délivrées par l'émetteur (1).

14. Télémètre selon l'une des revendications 10 à 13, caractérisé par le fait que les orifices (60 à 65) ménagés dans la première région périphérique du disque (55) sont rassemblés en des groupes comprenant, à chaque fois, n orifices et entre lesquels se trouvent des groupes de miroirs comprenant, à chaque fois, n miroirs (70 à 75) ; par le fait que chacun des groupes d'orifices (60 à 65) comprend au moins un orifice (60, 61) prolongé dans le sens périphérique et ne logeant aucun filtre ; et par le fait que les orifices restants (62 à 65) renferment des filtres atténuateurs qui présentent tous le même facteur d'atténuation et sont disposés à l'oblique, par rapport à l'axe optique (15a), selon un angle différant de 90°.

15. Télémètre selon l'une des revendications 10 à 14, caractérisé par le fait qu'un orifice (60 à 65) ou respectivement un miroir (70 à 75), dans la première région du disque (55), et un orifice (90 à 95) dans la deuxième région du disque (55) sont toujours disposés, par leurs centres, sur un rayon radial commun partant de l'axe de rotation (56) du disque (55) ; et par le fait que le disque (55) est percé d'au moins un trou (98) qui est espacé, de l'axe de rotation (56), d'une autre distance que les orifices (60 à 65 et 90 à 95) et les miroirs (70 à 75), et qui dégage une fois, lors de chaque tour complet du disque (55), une barrière photo-électrique (90, 100) dont le signal sert à déterminer la position instantanée du disque (55) et à surveiller sa vitesse de rotation.

16. Télémètre selon la revendication 15, caractérisé par le fait qu'un trou (98), dégageant la barrière photo-électrique, est prévu à un espacement angulaire préétabli devant chacun des rayons radiaux qui relient respectivement le centre de deux orifices, ou d'un orifice et d'un miroir ; et par le fait que les signaux, délivrés par la barrière photo-électrique (99, 100) au cours du franchissement de ces trous (98), servent à apprêter le déclenchement d'une implusion lumineuse.

17. Télémètre selon l'une des revendications 10 à 16, caractérisé par le fait que la zone (35) de liaison du trajet optique est formée, entre le disque rotatif (55) et le récepteur opto-électrique (23), par un miroir partiellement translucide (85) qui est disposé à l'oblique par rapport à l'axe optique du trajet optique de réception, qui est traversé rectilignement par les impulsions lumineuses de mesurage réfléchies par la cible, et par l'intermédiaire duquel les impulsions lumineuses de référence, provenant du trajet optique de référence (11), sont déviées et couplées dans la partie (21) du trajet optique de réception (19, 21) qui gagne le récepteur opto-électrique (23).

18. Télémètre selon l'une des revendications précédentes, caractérisé par le fait qu'un organe atténuateur (83) présentant un facteur d'atténuation fixe, et un organe atténuateur commandable (33) présentant un facteur d'atténuation variable, se succèdent en série sur le trajet optique de référence (11).

19. Télémètre selon la revendication 18, caractérisé par le fait que le rapport entre les facteurs d'atténuation maximal et minimal de l'organe atténuateur commandable (33) est au moins égal au produit d'une valeur numérique tenant compte du relâchement de la puissance de l'émetteur, dû au vieillissement, et du rapport entre les amplitudes de signaux maximale et minimale susceptibles d'être encore traitées par le récepteur opto-électrique (23) et par son canal branché en aval.

20. Télémètre selon la revendication 18, caractérisé par le fait que le rapport entre les facteurs d'atténuation maximal et minimal de l'organe atténuateur commandable (33) est au moins égal au produit d'une valeur numérique tenant compte du relâchement de la puissance de l'émetteur, dû au vieillissement, du rapport entre les amplitudes de signaux maximale et minimale susceptibles d'être encore traitées par le récepteur opto-électrique (23) et par son canal branché en aval, et du rapport entre les puissances maximale et minimale pouvant être délivrées par l'émetteur (1).

21. Télémètre selon l'une des revendications 18 à 20, caractérisé par le fait que l'organe atténuateur commandable (33) est un disque (80) à coin neutre, auquel un moteur pas à pas (81) peut imprimer une rotation.

22. Télémètre selon l'une des revendications 18 à 20, caractérisé par le fait que l'organe atténuateur commandable (33) est une galette PLZT ou PLMNZT.

23. Télémètre selon l'une des revendications 18 à 22, caractérisé par le fait que le signal de commande de l'organe atténuateur commandable (33) est obtenu par comparaison des amplitudes de signaux amplifiées et redressées, que le récepteur opto-électrique (23) délivre, d'une part, lors de la réception d'une impulsion lumineuse de mesurage et, d'autre part, lors de la réception d'une impulsion lumineuse de référence.

24. Télémètre selon l'une des revendications précédentes, muni d'un hacheur servant à engendrer les différentes tensions nécessaires, caractérisé par le fait que le générateur de déclenchement (3) est commandé, en fonction des oscillations du hacheur, de façon telle que le début et la fin des mesurages de la durée de transit des signaux coïncident avec des intervalles de temps durant lesquels il ne se produit pas de perturbations dues aux flancs des oscillations du hacheur.

25. Télémètre selon l'une des revendications 1 à 24, muni d'un hacheur servant à engendrer les différentes tensions nécessaires, caractérisé par la présence d'un circuit pour supprimer les oscillations du hacheur, pendant les intervalles de temps avec lesquels peuvent coïncider le début et la fin d'un mesurage de la durée de transit des signaux, ainsi que d'un condensateur tampon qui assure, durant ces intervalles de temps, l'alimentation de l'appareil en courant.

26. Télémètre selon l'une des revendications précédentes, caractérisé par le fait que, en vue de l'optimalisation du rapport signal/bruit, un filtre à interférence (87), pouvant être accordé dans la fréquence moyenne, est disposé sur un trajet optique précédant le récepteur opto-électrique (23).

FIG.1

# FIG. 2

# FIG. 3

# FIG. 4